# EUROPEAN PATENT APPLICATION

(11) **EP 4 773 640 A1**
(43) Date of publication of application: **08.07.2026**
(21) Application number: 24878809.3
(22) Date of filing: 24.09.2024
(51) Int. Cl.: H04W 8/00

(54) **ARTIFICIAL INTELLIGENCE MODEL SERVICE DISCOVERY METHOD AND APPARATUS, DEVICE, AND STORAGE MEDIUM**

(30) Priority: 18.10.2023 CN 202311353238
(71) Applicant: Datang Mobile Communications Equipment Co., Ltd., Beijing 100085 (CN)
(72) Inventor: LUO, Zhangyu, Beijing 100085 (CN)
(74) Representative: Ipsilon
(86) International application number: PCT/CN2024/120749
(87) International publication number: WO 2025/082162

(57) **Abstract**

The present application relates to an artificial intelligence model service discovery method and apparatus, a device, and a storage medium. The method comprises: an iNB sends artificial intelligence model service network element information to an intelligent wireless terminal (iWT), wherein the artificial intelligence model service network element information comprises an identifier of an artificial intelligence model service network element with which the iNB is capable of communicating and/or artificial intelligence model service capability information, the artificial intelligence model service network element is a network element capable of providing an artificial intelligence model in an intelligent wireless access network, and the artificial intelligence model service capability information is used for instructing the iWT to obtain a limiting condition for the artificial intelligence model from the iNB; and the iNB receives a model request sent by the iWT based on the artificial intelligence model service network element information. The present method provides a new artificial intelligence model service discovery process design for the endogenous intelligence characteristics of the intelligent wireless access network.

## Description

### CROSS-REFERENCE

This application claims priority to Chinese Patent Application No. 2023113532388, entitled "Artificial Intelligence Model Service Discovery Method and Apparatus, Device, and Storage Medium", filed on October 18, 2023, which is incorporated herein by reference in its entirety.

### TECHNICAL FIELD

The present application relates to the field of wireless communication technologies, and in particular, to an artificial intelligence model service discovery method and apparatus, a device, and a storage medium.

### BACKGROUND

Endogenous intelligence is an important characteristic of the next generation mobile wireless network (such as 6G), which emphasizes that an artificial intelligence (Al) capability is inherent in and used by a radio access network and assists continuous optimization and evolution of the radio access network to form an intelligent radio access network.

Currently, there is an urgent need to provide a new process design for the endogenous intelligence characteristic of the intelligent radio access network.

### SUMMARY

Embodiments of the present application provide an artificial intelligence model service discovery method and apparatus, a device, and a storage medium, which are a new process design for artificial intelligence model service discovery provided for the endogenous intelligence characteristic of an intelligent radio access network.

In a first aspect, an embodiment of the present application provides an artificial intelligence model service discovery method. The method is applied in an intelligent base station (iNB) in an intelligent radio access network, and the method includes:
sending, by the iNB, artificial intelligence model service network element information to an intelligent wireless terminal (iWT), where the artificial intelligence model service network element information includes an identifier of an artificial intelligence model service network element with which the iNB is capable of communicating and/or artificial intelligence model service capability information, the artificial intelligence model service network element is a network element capable of providing an artificial intelligence model in the intelligent radio access network, and the artificial intelligence model service capability information is configured for indicating a limiting condition for obtaining of the artificial intelligence model from the iNB by the iWT; and
receiving, by the iNB, a model request sent by the iWT based on the artificial intelligence model service network element information.

In an embodiment, the method further includes:
obtaining, by the iNB, the artificial intelligence model service network element information based on a service discovery process; or
obtaining, by the iNB, the artificial intelligence model service network element information based on a network configuration; or
obtaining, by the iNB, the artificial intelligence model service network element information based on a service discovery process and a network configuration.

In an embodiment, the artificial intelligence model service network element information includes the identifiers of one or more artificial intelligence model service network elements; and/or
the identifier of any one of the artificial intelligence model service network elements in the artificial intelligence model service network element information corresponds to one or more pieces of artificial intelligence model service capability information.

In an embodiment, the limiting condition indicated by the artificial intelligence model service capability information includes at least one of:
a limiting condition determined based on a model providing capability of the artificial intelligence model service network element; or
a limiting condition of the iNB on use of the model by the iWT.

In an embodiment, sending, by the iNB, the artificial intelligence model service network element information to the iWT includes:
sending, by the iNB, artificial intelligence model service system information to the iWT, the artificial intelligence model service system information carrying the artificial intelligence model service network element information.

In an embodiment, before sending, by the iNB, the artificial intelligence model service system information to the iWT, the method further includes:
sending, by the iNB, configuration information for the artificial intelligence model service system information to the iWT, the configuration information being configured for indicating that the iNB supports an artificial intelligence model obtaining service.

In an embodiment, sending, by the iNB, the configuration information for the artificial intelligence model service system information to the iWT includes:
sending a first broadcast message by the iNB, the first broadcast message carrying the configuration information.

In an embodiment, the configuration information is further configured for indicating an obtaining manner of the artificial intelligence model service system information.

In an embodiment, the obtaining manner of the artificial intelligence model service system information includes at least one of the following manners:
the artificial intelligence model service system information is sent through a broadcast message based on a broadcast occasion applied to the artificial intelligence model service system information; or
the artificial intelligence model service system information is sent based on a request of the iWT.

In an embodiment, sending, by the iNB, the artificial intelligence model service system information to the iWT includes:
in the case where the obtaining manner of the artificial intelligence model service system information is that the artificial intelligence model service system information is sent through the broadcast message, sending, by the iNB, a second broadcast message based on the broadcast occasion applied to the artificial intelligence model service system information, the second broadcast message carrying the artificial intelligence model service system information.

In an embodiment, sending, by the iNB, the artificial intelligence model service system information to the iWT includes:
in the case where the obtaining manner of the artificial intelligence model service system information is that the artificial intelligence model service system information is sent based on the request of the iWT, receiving, by the iNB, an information obtaining request sent by the iWT, and sending, by the iNB, the artificial intelligence model service system information to the iWT based on the information obtaining request.

In a second aspect, an embodiment of the present application provides an artificial intelligence model service discovery method. The method is applied in an iWT, and the method includes:
receiving, by the iWT, artificial intelligence model service network element information sent by an iNB, where the artificial intelligence model service network element information includes an identifier of an artificial intelligence model service network element with which the iNB is capable of communicating and/or artificial intelligence model service capability information, the artificial intelligence model service network element is a network element capable of providing an artificial intelligence model in an intelligent radio access network, and the artificial intelligence model service capability information is configured for indicating a limiting condition for obtaining of the artificial intelligence model from the iNB by the iWT; and
sending, by the iWT, a model request to the iNB based on the artificial intelligence model service network element information.

In an embodiment, the artificial intelligence model service network element information includes the identifiers of one or more artificial intelligence model service network elements; and/or,
the identifier of any one of the artificial intelligence model service network elements in the artificial intelligence model service network element information corresponds to one or more pieces of artificial intelligence model service capability information.

In an embodiment, the limiting condition indicated by the artificial intelligence model service capability information includes at least one of:
a limiting condition determined based on a model providing capability of the artificial intelligence model service network element; or
a limiting condition of the iNB on use of the model by the iWT.

In an embodiment, receiving, by the iWT, the artificial intelligence model service network element information sent by the iNB includes:
receiving, by the iWT, artificial intelligence model service system information sent by the iNB, the artificial intelligence model service system information carrying the artificial intelligence model service network element information.

In an embodiment, before receiving, by the iWT, the artificial intelligence model service system information sent by the iNB, the method further includes:
receiving, by the iWT, configuration information for the artificial intelligence model service system information sent by the iNB, the configuration information being configured for indicating that the iNB supports an artificial intelligence model obtaining service.

In an embodiment, receiving, by the iWT, the configuration information for the artificial intelligence model service system information sent by the iNB includes:
receiving, by the iWT, a first broadcast message sent by the iNB, the first broadcast message carrying the configuration information.

In an embodiment, the configuration information is further configured for indicating an obtaining manner of the artificial intelligence model service system information.

In an embodiment, the obtaining manner of the artificial intelligence model service system information includes at least one of the following manners:
the artificial intelligence model service system information is sent through a broadcast message based on a broadcast occasion applied to the artificial intelligence model service system information; or
the artificial intelligence model service system information is sent based on a request of the iWT.

In an embodiment, receiving, by the iWT, the artificial intelligence model service system information sent by the iNB includes:
in the case where it is determined, according to the configuration information, that the obtaining manner of the artificial intelligence model service system information is that the artificial intelligence model service system information is sent through the broadcast message, receiving, by the iWT, a second broadcast message sent by the iNB based on the broadcast occasion applied to the artificial intelligence model service system information, the second broadcast message carrying the artificial intelligence model service system information.

In an embodiment, receiving, by the iWT, the artificial intelligence model service system information sent by the iNB includes:
in the case where it is determined, according to the configuration information, that the obtaining manner of the artificial intelligence model service system information is that the artificial intelligence model service system information is sent based on the request of the iWT, sending an information obtaining request to the iNB by the iWT; and
receiving, by the iWT, the artificial intelligence model service system information sent by the iNB based on the information obtaining request.

In a third aspect, an embodiment of the present application provides an artificial intelligence model service discovery apparatus. The apparatus is applied in an iNB in an intelligent radio access network, and the apparatus includes:
a sending unit configured to send artificial intelligence model service network element information to an iWT, where the artificial intelligence model service network element information includes an identifier of an artificial intelligence model service network element with which the iNB is capable of communicating and/or artificial intelligence model service capability information, the artificial intelligence model service network element is a network element capable of providing an artificial intelligence model in the intelligent radio access network, and the artificial intelligence model service capability information is configured for indicating a limiting condition for obtaining of the artificial intelligence model from the iNB by the iWT; and
a receiving unit configured to receive a model request sent by the iWT based on the artificial intelligence model service network element information.

In a fourth aspect, an embodiment of the present application provides an artificial intelligence model service discovery apparatus. The apparatus is applied in an iWT, and the apparatus includes:
a receiving unit configured to receive artificial intelligence model service network element information sent by an iNB, where the artificial intelligence model service network element information includes an identifier of an artificial intelligence model service network element with which the iNB is capable of communicating and/or artificial intelligence model service capability information, the artificial intelligence model service network element is a network element capable of providing an artificial intelligence model in an intelligent radio access network, and the artificial intelligence model service capability information is configured for indicating a limiting condition for obtaining of the artificial intelligence model from the iNB by the iWT; and
a sending unit configured to send a model request to the iNB based on the artificial intelligence model service network element information.

In a fifth aspect, an embodiment of the present application provides an intelligent base station (iNB). The iNB includes:
a memory for storing a computer program; a transceiver for transmitting and receiving data under control of a processor; and the processor for reading the computer program in the memory and performing the following operations:
controlling the transceiver to send artificial intelligence model service network element information to an iWT, where the artificial intelligence model service network element information includes an identifier of an artificial intelligence model service network element with which the iNB is capable of communicating and/or artificial intelligence model service capability information, the artificial intelligence model service network element is a network element capable of providing an artificial intelligence model in an intelligent radio access network, and the artificial intelligence model service capability information is configured for indicating a limiting condition for obtaining of the artificial intelligence model from the iNB by the iWT; and
controlling the transceiver to receive a model request sent by the iWT based on the artificial intelligence model service network element information.

In an embodiment, the processor is specifically configured to perform the following operation:
obtaining the artificial intelligence model service network element information based on a service discovery process; or
obtaining the artificial intelligence model service network element information based on a network configuration; or
obtaining the artificial intelligence model service network element information based on a service discovery process and a network configuration.

In an embodiment, the artificial intelligence model service network element information includes the identifiers of one or more artificial intelligence model service network elements; and/or
the identifier of any one of the artificial intelligence model service network elements in the artificial intelligence model service network element information corresponds to one or more pieces of artificial intelligence model service capability information.

In an embodiment, the limiting condition indicated by the artificial intelligence model service capability information includes at least one of:
a limiting condition determined based on a model providing capability of the artificial intelligence model service network element; or
a limiting condition of the iNB on use of the model by the iWT.

In an embodiment, the processor is specifically configured to perform the following operation:
controlling the transceiver to send artificial intelligence model service system information to the iWT, the artificial intelligence model service system information carrying the artificial intelligence model service network element information.

In an embodiment, the processor is specifically configured to perform the following operation:
controlling the transceiver to send configuration information for the artificial intelligence model service system information to the iWT, the configuration information being configured for indicating that the iNB supports an artificial intelligence model obtaining service.

In an embodiment, the processor is specifically configured to perform the following operation:
controlling the transceiver to send a first broadcast message, the first broadcast message carrying the configuration information.

In an embodiment, the configuration information is further configured for indicating an obtaining manner of the artificial intelligence model service system information.

In an embodiment, the obtaining manner of the artificial intelligence model service system information includes at least one of the following manners:
the artificial intelligence model service system information is sent through a broadcast message based on a broadcast occasion applied to the artificial intelligence model service system information; or
the artificial intelligence model service system information is sent based on a request of the iWT.

In an embodiment, the processor is specifically configured to perform the following operation:
in the case where the obtaining manner of the artificial intelligence model service system information is that the artificial intelligence model service system information is sent through the broadcast message, controlling the transceiver to send a second broadcast message based on the broadcast occasion applied to the artificial intelligence model service system information, the second broadcast message carrying the artificial intelligence model service system information.

In an embodiment, the processor is specifically configured to perform the following operation:
in the case where the obtaining manner of the artificial intelligence model service system information is that the artificial intelligence model service system information is sent based on the request of the iWT, controlling the transceiver to receive an information obtaining request sent by the iWT, and send the artificial intelligence model service system information to the iWT based on the information obtaining request.

In a sixth aspect, an embodiment of the present application provides an intelligent wireless terminal (iWT). The iWT includes:
a memory for storing a computer program; a transceiver for transmitting and receiving data under control of a processor; and the processor for reading the computer program in the memory and performing the following operations:
controlling the transceiver to receive artificial intelligence model service network element information sent by an iNB, where the artificial intelligence model service network element information includes an identifier of an artificial intelligence model service network element with which the iNB is capable of communicating and/or artificial intelligence model service capability information, the artificial intelligence model service network element is a network element capable of providing an artificial intelligence model in an intelligent radio access network, and the artificial intelligence model service capability information is configured for indicating a limiting condition for obtaining of the artificial intelligence model from the iNB by the iWT; and
controlling the transceiver to send a model request to the iNB based on the artificial intelligence model service network element information.

In an embodiment, the artificial intelligence model service network element information includes the identifiers of one or more artificial intelligence model service network elements; and/or
the identifier of any one of the artificial intelligence model service network elements in the artificial intelligence model service network element information corresponds to one or more pieces of artificial intelligence model service capability information.

In an embodiment, the limiting condition indicated by the artificial intelligence model service capability information includes at least one of:
a limiting condition determined based on a model providing capability of the artificial intelligence model service network element; or
a limiting condition of the iNB on use of the model by the iWT.

In an embodiment, the processor is specifically configured to perform the following operation:
controlling the transceiver to receive artificial intelligence model service system information sent by the iNB, the artificial intelligence model service system information carrying the artificial intelligence model service network element information.

In an embodiment, the processor is specifically configured to perform the following operation:
controlling the transceiver to receive configuration information for the artificial intelligence model service system information sent by the iNB, the configuration information being configured for indicating that the iNB supports an artificial intelligence model obtaining service.

In an embodiment, the processor is specifically configured to perform the following operation:
controlling the transceiver to receive a first broadcast message sent by the iNB, the first broadcast message carrying the configuration information.

In an embodiment, the configuration information is further configured for indicating an obtaining manner of the artificial intelligence model service system information.

In an embodiment, the obtaining manner of the artificial intelligence model service system information includes at least one of the following manners:
the artificial intelligence model service system information is sent through a broadcast message based on a broadcast occasion applied to the artificial intelligence model service system information; or
the artificial intelligence model service system information is sent based on a request of the iWT.

In an embodiment, the processor is specifically configured to perform the following operation:
in the case where it is determined, according to the configuration information, that the obtaining manner of the artificial intelligence model service system information is that the artificial intelligence model service system information is sent through the broadcast message, controlling the transceiver to receive a second broadcast message sent by the iNB based on the broadcast occasion applied to the artificial intelligence model service system information, the second broadcast message carrying the artificial intelligence model service system information.

In an embodiment, the processor is specifically configured to perform the following operations:
in the case where it is determined, according to the configuration information, that the obtaining manner of the artificial intelligence model service system information is that the artificial intelligence model service system information is sent based on the request of the iWT, controlling the transceiver to send an information obtaining request to the iNB; and
controlling the transceiver to receive the artificial intelligence model service system information sent by the iNB based on the information obtaining request.

In a seventh aspect, an embodiment of the present application provides a computer-readable storage medium. The computer-readable storage medium has a computer program stored thereon, the computer program, when executed by a processor, implementing the steps of the method in the above first aspect.

In an eighth aspect, an embodiment of the present application provides a computer-readable storage medium. The computer-readable storage medium has a computer program stored thereon, the computer program, when executed by a processor, implementing the steps of the method in the above second aspect.

In a ninth aspect, an embodiment of the present application provides a chip. The chip includes a programmable logic circuit and/or program instructions, and when the chip is running, it implements the steps of the method in the above first aspect or second aspect.

In the artificial intelligence model service discovery method and apparatus, the device, and the storage medium described above, the iNB in the intelligent radio access network sends the artificial intelligence model service network element information to the iWT, the artificial intelligence model service network element information includes the identifier of the artificial intelligence model service network element with which the iNB is capable of communicating and/or the artificial intelligence model service capability information, the artificial intelligence model service network element is the network element capable of providing the artificial intelligence model in the intelligent radio access network, and the artificial intelligence model service capability information is configured for indicating the limiting condition for obtaining of the artificial intelligence model from the iNB by the iWT, so that the iWT can send the model request to the iNB based on the artificial intelligence model service network element information, and the iNB can receive the model request sent by the iWT based on the artificial intelligence model service network element information, thereby realizing an air interface discovery process of an artificial intelligence model service matching the endogenous intelligence characteristic of the intelligent radio access network. The embodiments of the present application provide a new process design for artificial intelligence model service discovery for the endogenous intelligence characteristic of the intelligent radio access network.

### BRIEF DESCRIPTION OF THE DRAWINGS

FIG. 1 is a schematic diagram of an exemplary architecture of a radio access network with an add-on intelligence characteristic;
FIG. 2-1 is a schematic flow diagram of training of an artificial intelligence model through NG-RAN OAM and inference of the artificial intelligence model through an NG-RAN node;
FIG. 2-2 is a schematic flow diagram of training and inference of an artificial intelligence model through an NG-RAN node;
FIG. 3 is a schematic diagram of a distributed deployment of RAN-DCA;
FIG. 4 is a schematic diagram of a centralized deployment of RAN-DCA;
FIG. 5 is a schematic diagram of a hybrid deployment of RAN-DCA;
FIG. 6 is a schematic diagram of an exemplary architecture of an intelligent RAN with an endogenous intelligence characteristic;
FIG. 7 is a schematic diagram of an implementation environment of an artificial intelligence model service discovery method according to an embodiment;
FIG. 8 is a schematic flow diagram of an artificial intelligence model service discovery method according to an embodiment;
FIG. 9 is a schematic flow diagram of an artificial intelligence model service discovery method according to another embodiment;
FIG. 10 is a schematic flow diagram of an artificial intelligence model service discovery method according to another embodiment;
FIG. 11 is a schematic flow diagram of an artificial intelligence model service discovery method according to another embodiment;
FIG. 12 is a schematic flow diagram of an artificial intelligence model service discovery method according to another embodiment;
FIG. 13 is a schematic message flow diagram of an artificial intelligence model service discovery method according to another embodiment;
FIG. 14 is a schematic message flow diagram of an artificial intelligence model service discovery method according to another embodiment;
FIG. 15 is a structural block diagram of an artificial intelligence model service discovery apparatus according to an embodiment;
FIG. 16 is a structural block diagram of an artificial intelligence model service discovery apparatus according to another embodiment;
FIG. 17 is a schematic structural diagram of an intelligent base station according to an embodiment;
FIG. 18 is a schematic structural diagram of an intelligent wireless terminal according to an embodiment; and
FIG. 19 is a schematic structural diagram of a chip according to an embodiment.

### DETAILED DESCRIPTION

In order to make the objects, technical solutions, and advantages of the present application more clear, the present application will be described in further detail below with reference to the accompanying drawings and embodiments. It should be understood that the specific embodiments described herein are only for explaining the present application, and not intended to limit the present application.

Endogenous intelligence is an important characteristic of the next generation mobile wireless network (such as 6G), which emphasizes that an AI capability is inherent in and used by a radio access network and assists continuous optimization and evolution of the radio access network to form an intelligent radio access network.

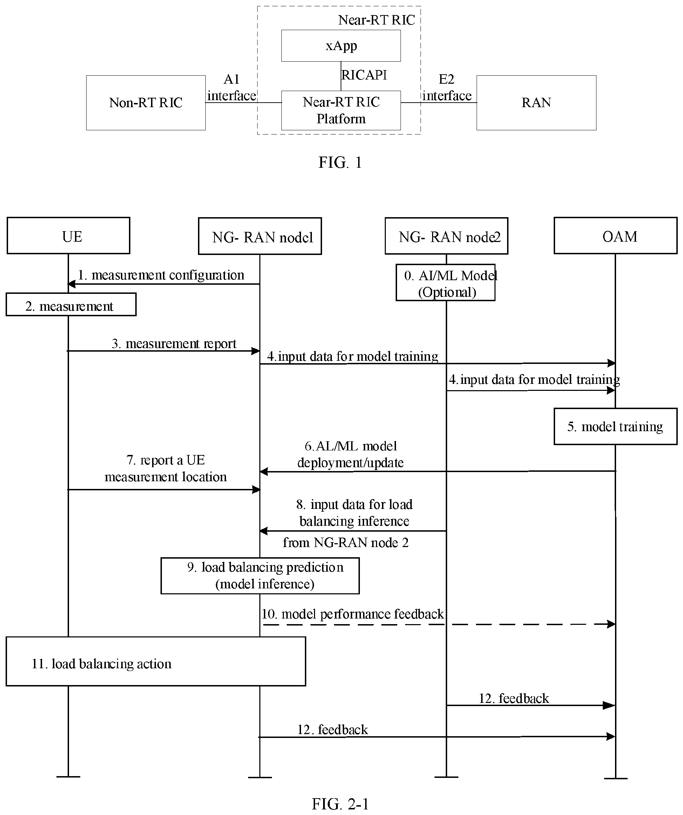

Referring to FIG. 1, FIG. 1 is a schematic diagram of an exemplary architecture of a radio access network with an add-on intelligence characteristic. In an Open Radio Access Network (O-RAN), a Near Real Time RAN Intelligent Controller (Near-RT RIC) collects Radio Access Network (RAN) information through an E2 interface, obtains A1-P information (i.e., policy information) from an A1 interface, and then performs intelligent processing on the RAN information, the A1-P information, and A1 interface auxiliary information to obtain signaling for guiding RAN behaviors (such as a configuration of wireless parameters and mobility events).

As shown in FIG. 1, the Near-RT RIC is composed of a Near-RT RIC platform and an extended application (xApp). Intelligent processing is performed in the xApp, and the intelligent processing includes processes of inference of an artificial intelligence model, or the like. The Near-RT RIC platform is connected to a Non Real-Time RAN Intelligent Controller (Non-RT RIC) and the RAN, and is responsible for forwarding inputs related to intelligent processing provided by the Non-RT RIC and the RAN to the xApp, and after the xApp finishes inference of the artificial intelligence model based on the inputs, the Near-RT RIC platform transfers an intelligent output of the artificial intelligence model to the RAN.

In some cases, in 3rd Generation Partnership Project (3GPP) New Radio (NR) networks, a Next Generation Radio Access Network (NG-RAN) Operation Administration and Maintenance (OAM) or an NG-RAN node is multiplexed as a place for training and inference of the artificial intelligence model.

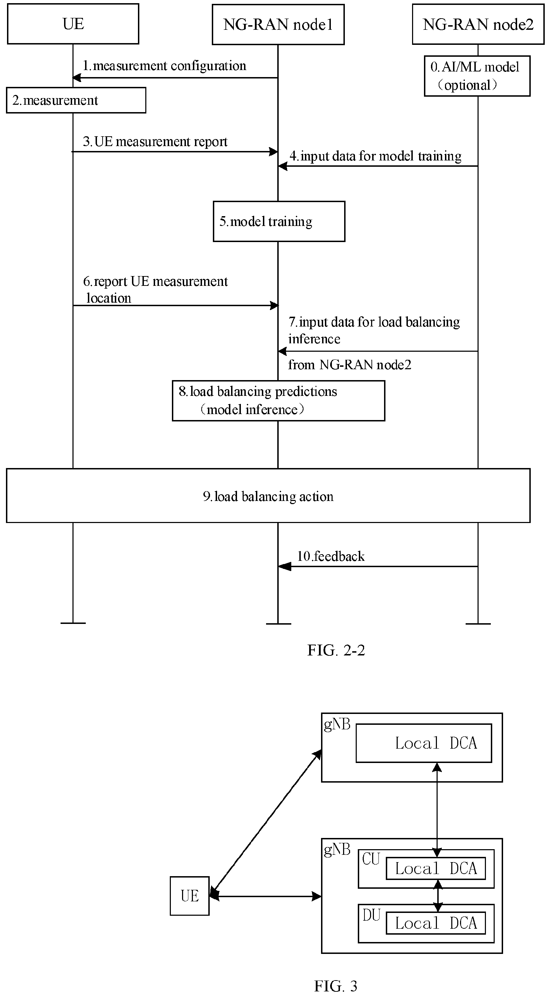

Referring to FIG. 2-1 and FIG. 2-2, FIG. 2-1 is an exemplary schematic flow diagram of training of an artificial intelligence model through the NG-RAN OAM and inference of the artificial intelligence model through the NG-RAN node.

The process shown in FIG. 2-1 is as follows.
1. NG-RAN node1 sends a measurement configuration to user equipment (UE);
2. the UE performs measurement;
3. the UE reports a UE measurement report to the NG-RAN node1;
4. the NG-RAN node1 and NG-RAN node2 send input data for model training to the OAM;
5. the OAM performs model training;
6. the OAM module sends an Artificial Intelligence (Al)/Machine Learning (ML) model deployment/update to the NG-RAN node1;
7. the UE reports a UE measurement location to the NG-RAN node1;
8. the NG-RAN node2 sends input data for load balancing inference to the NG-RAN node1;
9. the NG-RAN node1 performs load balancing predictions (i.e., model inference);
10. optionally, the NG-RAN node1 sends model performance feedback to the OAM;
11. the UE and the NG-RAN node1 perform a load balancing action; and
12. the NG-RAN node1 and the NG-RAN node2 send feedback to the OAM.

FIG. 2-2 is an exemplary schematic flow diagram of training and inference of the artificial intelligence model through the NG-RAN node.

The process shown in FIG. 2-2 is as follows.
1. NG-RAN node1 sends a measurement configuration to UE;
2. the UE performs measurement;
3. the UE reports a UE measurement report to the NG-RAN node1;
4. NG-RAN node2 sends input data for model training to the NG-RAN node1;
5. the NG-RAN node1 performs model training;
6. the UE reports a UE measurement location to the NG-RAN node1;
7. the NG-RAN node2 sends input data for load balancing inference to the NG-RAN node1;
8. the NG-RAN node1 performs load balancing predictions;
9. the UE, the NG-RAN node1 and the NG-RAN node2 perform a load balancing action; and
10. the NG-RAN node2 sends feedback to the NG-RAN node1.

In some cases, the solution that Radio Access Network-Data Collection and Analysis (RAN-DCA) modules are responsible for the processes such as training and inference of the artificial intelligence model is also discussed, and the DCA modules can be deployed in the RAN in various forms. For example, referring to FIG. 3 to FIG. 5, schematic diagrams of three deployments of the DCA modules in the RAN are shown.

FIG. 3 shows a distributed deployment of the RAN-DCA modules, in which the DCA modules are deployed in a Centralized Unit (CU) and a Distributed Unit (DU) of gNodeB (gNB, a next generation base station), and the DCA modules jointly perform Federated learning to train the artificial intelligence model.

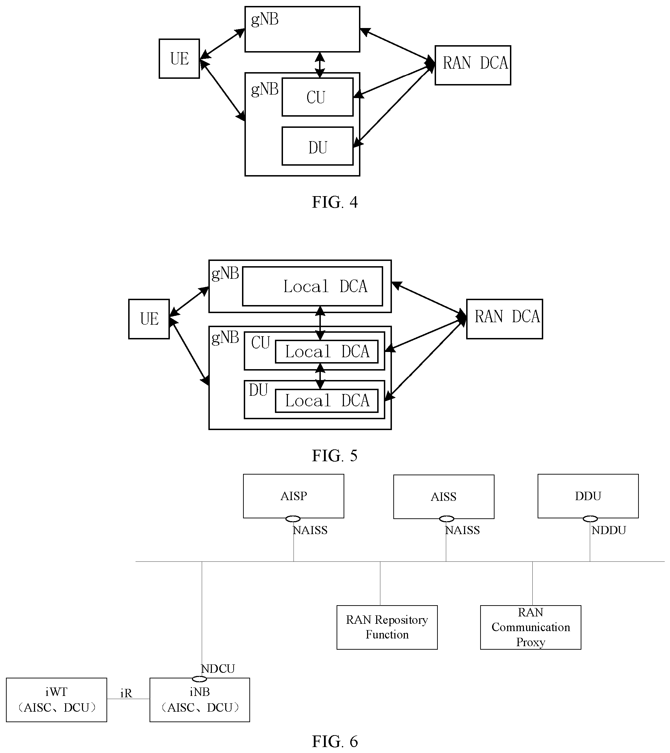

FIG. 4 shows a centralized deployment of the RAN-DCA modules, in which the DCA modules are deployed individually to train the artificial intelligence model. FIG. 5 shows a hybrid deployment of the RAN-DCA modules, in which the DCA modules are deployed in both distributed and centralized manners.

However, the above-mentioned architecture of the radio access network has the following problems.
1) The intelligent characteristic is not inherent to the architecture of the radio access network, but is added to an existing architecture as an additional characteristic. For 5G and other networks which are already deployed on a large scale, the intelligent characteristic is difficult to supplement.
2) The significant characteristics of a high computing power and a high storage capability of a wireless network element lead to increased costs in the design, development, deployment, operation and maintenance of the wireless network element.
3) Reliable radio access and wireless data transmission capabilities are still primary design goals of the radio access network, and the computing power, the storage capability and a wireless capability of the wireless network element are required to be differently emphasized according to different scenarios.

In view of this, in some other related arts, some other access network architectures are provided. Referring to FIG. 6, FIG. 6 is a schematic diagram of an exemplary architecture of an intelligent RAN (iRAN) with an endogenous intelligence characteristic.

Network elements of the architecture of the iRAN shown in FIG. 6 are introduced as follows.
1) AI Service Client (AISC) (such as an intelligent Wireless Terminal (iWT) and an intelligent Node B (iNB)): performances of the AISC can be optimized by using an artificial intelligence model.
2) AI Service Server (AISS): the AISS is configured to provide available artificial intelligence models such as a base station Radio Resource Management (RRM) model, a base station Medium Access Control (MAC) scheduling model, a base station uplink channel evaluation model, a terminal RRM model and a terminal downlink channel evaluation model.
3) AI Service Proxy (AISP): the AISP is introduced between the AISC and the AISS as a proxy of the AISS, so that a delay of obtaining of the artificial intelligence model by the AISC can be reduced, and a processing burden of the AISS can be reduced. For the AISC, the AISP and the AISS function equally.
4) Data Collection Unit (DCU) (such as an iWT and an iNB): the DCU is configured to perform collection of data including RAN data, or the like. The iWT and the iNB may have both the AISC function and the DCU function.
5) Data Dedicated Unit (DDU): the DDU is configured to perform data storage and data processing, organize data collection, storage, and calculation according to requirements of the AISS, and return the available model to the AISS.
   The data includes the RAN data, an analytic result, a model framework, or the like. The data processing includes model training, correlation analysis, or the like.
6) iNB (i.e., intelligent base station): the iNB is responsible for radio access processing, and may have a certain computing power and storage capability.
7) iWT: intelligent wireless terminal.
8) RAN repository function: the RAN repository function is configured to accept RAN function registration and provide RAN function discovery, and is a way to support service-based RAN function communication.
9) RAN communication proxy: the RAN communication proxy is configured to receive messages for RAN functions and forward the messages to appropriate destination functions, and is another way to support the service-based RAN function communication.

Interfaces between the network elements in the architecture of the iRAN shown in FIG. 6 are introduced as follows.
1) iR interface: the iR interface is an interface between the iWT and the iNB, i.e., an air interface, and is configured for radio access control and carries air interface transmissions of NAISS, NDCU, and NDDU.
2) NAISS interface: the NAISS interface is configured to provide the available artificial intelligence models such as the base station RRM model, the base station MAC scheduling model, the base station uplink channel evaluation model, the terminal RRM model and the terminal downlink channel evaluation model. Each of the AISS and the AISP can provide the NAISS interface, and the iWT, the iNB, the RAN repository function and the RAN communication proxy can use the NAISS interface.
3) NDCU interface: the NDCU interface is configured to provide a data collection service, and the data includes the RAN data, or the like. Both the iWT and the iNB can provide the NDCU interface, and the DDU can use the NDCU interface.
4) NDDU interface: the NDDU interface is configured to receive the collected data and provide data collection management, data storage and access, and artificial intelligence model training services, and the data includes the RAN data, the analytic result, the model framework, or the like. The DDU can provide the NDDU interface, and the AISS, the iWT and the iNB can use the NDDU interface.

The architecture of the iRAN shown in FIG. 6 employs a partially service-based architecture, this is because one AISS may face thousands of AISCs, and meanwhile, AI services are bursty, and therefore, end-to-end connections are not required to be maintained for a long time.

All the network elements in the architecture of the iRAN shown in FIG. 6 belong to the iRAN, the iNB and the iWT are a wireless part of the iRAN, and the AISP, the AISS and the DDU are an AI part of the iRAN. The iNB, the iWT, the AISP, the AISS and the DDU are logically independent of one another.

The AISC and the DCU are additional characteristics of the network elements of the iRAN: the AISC indicates that the corresponding network element (such as the iNB or the iWT) of the iRAN can request the artificial intelligence model from the AISS, and the DCU indicates that the corresponding network element of the iRAN can provide data collection for the DDU.

The RAN repository function and the RAN communication proxy are support units of the iRAN. For example, the RAN repository function is configured for registration and discovery of the service-based network elements, and the RAN communication proxy is configured to act as a proxy of communication between the service-based network elements.

However, currently, there is a lack of a process design for artificial intelligence model service discovery matched with the endogenous intelligence characteristic of the intelligent radio access network.

In view of this, an embodiment of the present application provides an artificial intelligence model service discovery method, which can implement an air interface discovery process of an artificial intelligence model service matched with the endogenous intelligence characteristic of the intelligent radio access network, and the artificial intelligence model service discovery method according to the embodiment of the present application is a new process design for artificial intelligence model service discovery provided for the endogenous intelligence characteristic of the intelligent radio access network.

Hereinafter, an implementation process of the artificial intelligence model service discovery method according to the embodiment of the present application is described in conjunction with an implementation environment related to the artificial intelligence model service discovery method according to the embodiment of the present application.

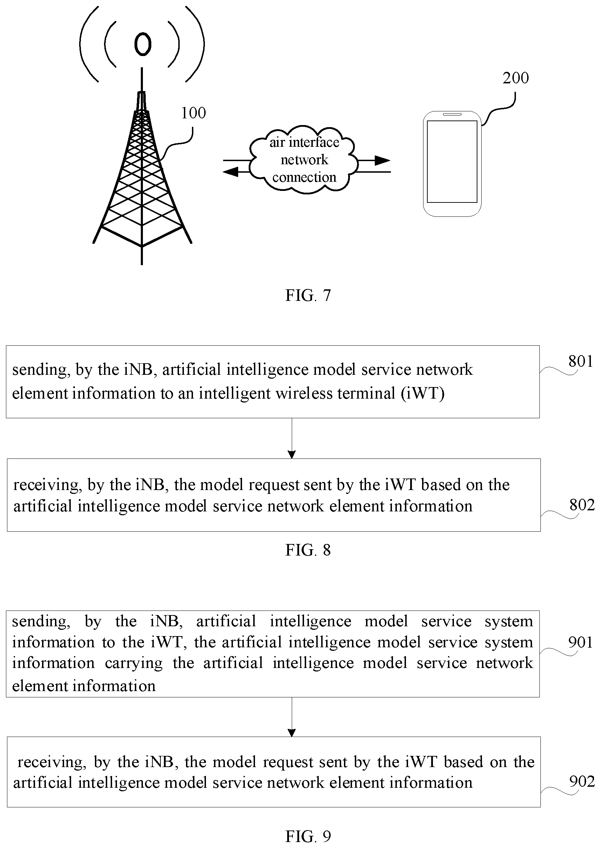

FIG. 7 is a schematic diagram of the implementation environment of the artificial intelligence model service discovery method according to the embodiment of the present application. As shown in FIG. 7, the implementation environment includes an intelligent base station (iNB) 100 and an intelligent wireless terminal (iWT) 200, and the iNB 100 and the iWT 200 perform data transmission through an air interface connection.

The iNB 100 is responsible for radio access processing, and may have a certain computing power and storage capability. The iNB 100 may be a base station in a 6G network.

The iWT 200 may be a device providing voice and/or other service data connectivity for a user, a handheld device having a wireless connection function, or other processing devices connected to a wireless modem. The iWT may be a mobile terminal such as a mobile telephone (or "cellular" telephone) and a computer having a mobile terminal, e.g., a portable, pocket, handheld, computer built-in or vehicle-mounted mobile apparatus, and may exchange voices and/or data with the radio access network. The iWT may also be referred to as a subscriber unit, a subscriber station, a mobile station, a remote station, a remote terminal, an access terminal, a user terminal, a user agent, or a user device or user equipment, and is not limited herein.

The technical solution of the present application and a way to solve the above technical problem by the technical solution of the present application are described in detail below by specific embodiments. The following several specific embodiments may be combined with each other, and same or similar concepts or processes may not be repeated in some embodiments. The embodiments of the present application will be described below with reference to the accompanying drawings.

In an embodiment, as shown in FIG. 8, an artificial intelligence model service discovery method is provided. The description is given with the method applied to an intelligent base station (iNB) (for example, the iNB 100 in FIG. 7) in an intelligent radio access network as an example, and the method includes the following steps.

Step 801: sending, by the iNB, artificial intelligence model service network element information to an intelligent wireless terminal (iWT).

The artificial intelligence model service network element information includes an identifier of an artificial intelligence model service network element with which the iNB is capable of communicating and/or artificial intelligence model service capability information. The artificial intelligence model service network element is a network element capable of providing an artificial intelligence model in the intelligent radio access network. In the embodiment of the present application, an architecture of the intelligent radio access network may be as shown in FIG. 6, and the artificial intelligence model service network element may be, for example, the AISS or the AISP as shown in FIG. 6.

In the embodiment of the present application, the artificial intelligence model may be an AI model or a Machine Learning (ML) model, or may be a Deep Learning (DL) model, a neural network model, or the like, and the type of the artificial intelligence model is not limited herein.

The intelligent radio access network has a large number of artificial intelligence model service network elements therein, but not all the artificial intelligence model service network elements can communicate with the iNB, and in the embodiment of the present application, the artificial intelligence model service network element information refers to information corresponding to the artificial intelligence model service network element that can communicate with the iNB.

The identifier of the artificial intelligence model service network element and the artificial intelligence model service capability information are introduced below.

The identifier of the artificial intelligence model service network element may have various forms, for example, a Uniform Resource Identifier (URI), a Fully Qualified Domain Name (FQDN), or the like.

The artificial intelligence model service capability information is configured for indicating a limiting condition for obtaining of the artificial intelligence model from the iNB by the iWT. The limiting condition indicated by the artificial intelligence model service capability information includes at least one of: a limiting condition determined based on a model providing capability of the artificial intelligence model service network element; or a limiting condition of the iNB on use of the model by the iWT.

The model providing capability of the artificial intelligence model service network element refers to the type of the artificial intelligence model that the artificial intelligence model service network element can provide. For example, if the artificial intelligence model service network element does not support generation of an X-type artificial intelligence model, the limiting condition is to limit the provision of the X-type artificial intelligence model. The limiting condition of the iNB on use of the model by the iWT may be a limitation of the iNB on use of a certain-type artificial intelligence model by the iWT. For example, the iNB does not allow the iWT to use a Y-type artificial intelligence model.

In the embodiment of the present application, the number of the artificial intelligence model service network elements with which the iNB is capable of communicating may be one or more, and therefore, the artificial intelligence model service network element information includes the identifiers of the one or more artificial intelligence model service network elements.

The identifier of any one of the artificial intelligence model service network elements in the artificial intelligence model service network element information corresponds to one or more pieces of artificial intelligence model service capability information. That is, one artificial intelligence model service network element corresponds to one or more limiting conditions for the obtaining of the artificial intelligence model from the iNB by the iWT.

A process of obtaining the artificial intelligence model service network element information is described below.

In the embodiment of the present application, the iNB obtains the artificial intelligence model service network element information based on a service discovery process. Alternatively, the iNB obtains the artificial intelligence model service network element information based on a network configuration. Alternatively, the iNB obtains the artificial intelligence model service network element information based on a service discovery process and a network configuration.
1) The iNB obtains the artificial intelligence model service network element information based on the service discovery process.

In this manner, the artificial intelligence model service network element information may be obtained from an AISS or AISP discovery process.

Exemplarily, each network element in the intelligent radio access network (such as the AISS, the AISP, the DDU and the AISC shown in FIG. 7) may perform function registration with the RAN repository function after being deployed, so that when the iNB sends an AISS or AISP discovery request message to the RAN repository function, the RAN repository function may obtain the artificial intelligence model service network element information by querying function registration information, and transfer the artificial intelligence model service network element information to the iNB.

2) The iNB obtains the artificial intelligence model service network element information based on the network configuration.

In this manner, the network configuration may be an OAM configuration. That is, the OAM in the network configures the artificial intelligence model service network element information for the iNB, and then, the iNB obtains the artificial intelligence model service network element information.

3) The iNB obtains the artificial intelligence model service network element information based on the service discovery process and the network configuration.

Optionally, the above manner of obtaining the artificial intelligence model service network element information may be implemented in a hybrid manner, and the manner of obtaining the artificial intelligence model service network element information by the iNB is not limited herein.

After obtaining the artificial intelligence model service network element information, the iNB sends the artificial intelligence model service network element information to the iWT. The iWT receives and stores the artificial intelligence model service network element information sent by the iNB, and the air interface discovery process of the artificial intelligence model service is completed.

As described above, the artificial intelligence model service network element information includes the identifier of the artificial intelligence model service network element with which the iNB is capable of communicating and/or the artificial intelligence model service capability information. The iWT sends a model request to the iNB based on the artificial intelligence model service network element information and requirements of the iWT.

Step 802: receiving, by the iNB, the model request sent by the iWT based on the artificial intelligence model service network element information.

The iNB responds to the model request sent by the iWT after receiving the model request.

In the above embodiments, the iNB in the intelligent radio access network sends the artificial intelligence model service network element information to the iWT. The artificial intelligence model service network element information includes the identifier of the artificial intelligence model service network element with which the iNB is capable of communicating and/or the artificial intelligence model service capability information. The artificial intelligence model service network element is the network element capable of providing the artificial intelligence model in the intelligent radio access network, and the artificial intelligence model service capability information is configured for indicating the limiting condition for obtaining of the artificial intelligence model from the iNB by the iWT, so that the iWT can send the model request to the iNB based on the artificial intelligence model service network element information, and the iNB can receive the model request sent by the iWT based on the artificial intelligence model service network element information. The embodiments of the present application provide a new process design for artificial intelligence model service discovery for the endogenous intelligence characteristic of the intelligent radio access network.

Based on the embodiment shown in FIG. 8, referring to FIG. 9, this embodiment relates to the process that the iNB sends the artificial intelligence model service network element information to the iWT. As shown in FIG. 9, the step 801 includes step 901 shown in FIG. 9:
step 901: sending, by the iNB, artificial intelligence model service system information to the iWT, the artificial intelligence model service system information carrying the artificial intelligence model service network element information.

In the embodiment of the present application, the iNB may send the artificial intelligence model service system information (system information AI) to the iWT, and the artificial intelligence model service network element information is carried in the artificial intelligence model service system information.

In this way, the iWT can receive the artificial intelligence model service system information sent by the iNB, and the artificial intelligence model service system information carries the artificial intelligence model service network element information, thereby achieving the process that the iWT receives the artificial intelligence model service network element information sent by the iNB.

After receiving the artificial intelligence model service system information sent by the iNB, the iWT can store the artificial intelligence model service network element information carried by the artificial intelligence model service system information, and the air interface discovery process of the artificial intelligence model service is completed. Then, the iWT sends the model request to the iNB based on the artificial intelligence model service network element information and the requirements of the iWT.

Step 902: receiving, by the iNB, the model request sent by the iWT based on the artificial intelligence model service network element information.

Processing of this step is the same as that of 802 in FIG. 8, and is not repeated herein.

A time when the iNB sends the artificial intelligence model service system information to the iWT is described below.

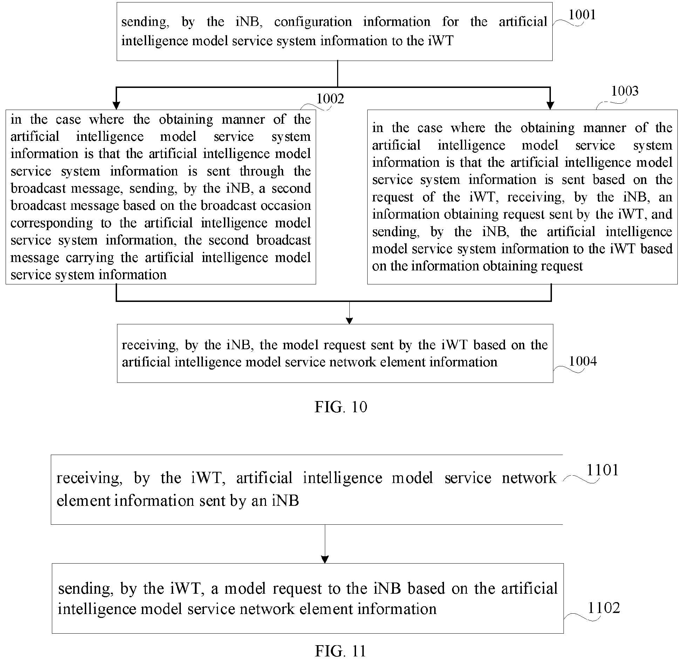

Based on the embodiment shown in FIG. 9, referring to FIG. 10, before the step 901, the artificial intelligence model service discovery method according to the embodiment of the present application further includes step 1001:
step 1001: sending, by the iNB, configuration information for the artificial intelligence model service system information to the iWT.

The configuration information is configured for indicating that the iNB supports an artificial intelligence model obtaining service.

Thus, the iWT can receive the configuration information for the artificial intelligence model service system information sent by the iNB.

In a possible implementation of the step 1001, the iNB may send a first broadcast message to the iWT, and the first broadcast message carries the above configuration information.

In this way, the iWT may receive the first broadcast message sent by the iNB, so as to obtain the above configuration information carried by the first broadcast message.

In the embodiment of the present application, the configuration information is further configured for indicating an obtaining manner of the artificial intelligence model service system information, and the obtaining manner of the artificial intelligence model service system information includes at least one of the following manners: the artificial intelligence model service system information is sent through a broadcast message based on a broadcast occasion applied to the artificial intelligence model service system information; or the artificial intelligence model service system information is sent based on a request of the iWT.

It can be understood that, if the artificial intelligence model service system information has a relatively large data amount and the intelligent wireless terminal and a non-intelligent wireless terminal coexist in a current access network, air interface broadcast resource consumption can be reduced by sending the artificial intelligence model service system information based on the request of the iWT.

Based on the configuration information, there are two possible ways for obtaining the artificial intelligence model service system information, and correspondingly, the step 901 includes step 1002 or step 1003 shown in FIG. 10.

Step 1002: in the case where the obtaining manner of the artificial intelligence model service system information is that the artificial intelligence model service system information is sent through the broadcast message, sending, by the iNB, a second broadcast message based on the broadcast occasion applied to the artificial intelligence model service system information, the second broadcast message carrying the artificial intelligence model service system information.

Exemplarily, the above configuration information may include a broadcast and the broadcast occasion, the iNB then sends the second broadcast message based on the broadcast occasion, and the second broadcast message carries the artificial intelligence model service system information.

The iWT receives the second broadcast message sent by the iNB based on the broadcast occasion applied to the artificial intelligence model service system information.

Step 1003: in the case where the obtaining manner of the artificial intelligence model service system information is that the artificial intelligence model service system information is sent based on the request of the iWT, receiving, by the iNB, an information obtaining request sent by the iWT, and sending, by the iNB, the artificial intelligence model service system information to the iWT based on the information obtaining request.

Exemplarily, the above configuration information indicates that the artificial intelligence model service system information is sent based on the request of the iWT, and after the iWT receives the configuration information, the iWT interested in the artificial intelligence model service system information sends the information obtaining request to the iNB. The iNB receives the information obtaining request sent by the iWT, the iNB sends the artificial intelligence model service system information to the iWT based on the information obtaining request, and the iWT receives the artificial intelligence model service system information sent by the iNB.

Thus, the iNB sends the artificial intelligence model service system information to the iWT at the above occasion, and the artificial intelligence model service system information carries the artificial intelligence model service network element information. The iWT may send the model request to the iNB based on the artificial intelligence model service network element information. The iNB receives the model request sent by the iWT and then responds to the model request, and the iWT may discover the artificial intelligence model service inherent to the intelligent radio access network through an air interface, so as to complete the air interface discovery process of the artificial intelligence model service.

Step 1004: receiving, by the iNB, the model request sent by the iWT based on the artificial intelligence model service network element information.

Processing of this step is the same as that of 802 in FIG. 8, and is not repeated herein.

In an embodiment, referring to FIG. 11, an artificial intelligence model service discovery method is provided and used in an iWT, and the method includes the following steps.

Step 1101: receiving, by the iWT, artificial intelligence model service network element information sent by an iNB.

The artificial intelligence model service network element information includes an identifier of an artificial intelligence model service network element with which the iNB is capable of communicating and/or artificial intelligence model service capability information. The artificial intelligence model service network element is a network element capable of providing an artificial intelligence model in an intelligent radio access network. The artificial intelligence model service capability information is configured for indicating a limiting condition for obtaining of the artificial intelligence model from the iNB by the iWT.

Step 1102: sending, by the iWT, a model request to the iNB based on the artificial intelligence model service network element information.

In an embodiment, the artificial intelligence model service network element information includes the identifiers of one or more artificial intelligence model service network elements; and/or, the identifier of any one of the artificial intelligence model service network elements in the artificial intelligence model service network element information corresponds to one or more pieces of artificial intelligence model service capability information.

In an embodiment, the limiting condition indicated by the artificial intelligence model service capability information includes at least one of:
a limiting condition determined based on a model providing capability of the artificial intelligence model service network element; or
a limiting condition of the iNB on use of the model by the iWT.

In an embodiment, the step 1101 includes:
step A1: receiving, by the iWT, artificial intelligence model service system information sent by the iNB, the artificial intelligence model service system information carrying the artificial intelligence model service network element information.

In an embodiment, before the step A1, the artificial intelligence model service discovery method according to the embodiment of the present application further includes:
step A2: receiving, by the iWT, configuration information for the artificial intelligence model service system information sent by the iNB, the configuration information being configured for indicating that the iNB supports an artificial intelligence model obtaining service.

In an embodiment, the iWT may receive a first broadcast message sent by the iNB, and the first broadcast message carries the configuration information to implement the process of the step A2.

In an embodiment, the configuration information is further configured for indicating an obtaining manner of the artificial intelligence model service system information.

In an embodiment, the obtaining manner of the artificial intelligence model service system information includes at least one of the following manners:
the artificial intelligence model service system information is sent through a broadcast message based on a broadcast occasion applied to the artificial intelligence model service system information; or
the artificial intelligence model service system information is sent based on a request of the iWT.

In a possible implementation of the step A1, in the case where it is determined, according to the configuration information, is that the obtaining manner of the artificial intelligence model service system information is that the artificial intelligence model service system information is sent through the broadcast message, the iWT receives a second broadcast message sent by the iNB based on the broadcast occasion applied to the artificial intelligence model service system information, the second broadcast message carrying the artificial intelligence model service system information.

In another possible implementation of the step A1, in the case where it is determined, according to the configuration information, that the obtaining manner of the artificial intelligence model service system information is that the the artificial intelligence model service system information is sent based on the request of the iWT, the iWT sends an information obtaining request to the iNB. The iWT receives the artificial intelligence model service system information sent by the iNB based on the information obtaining request.

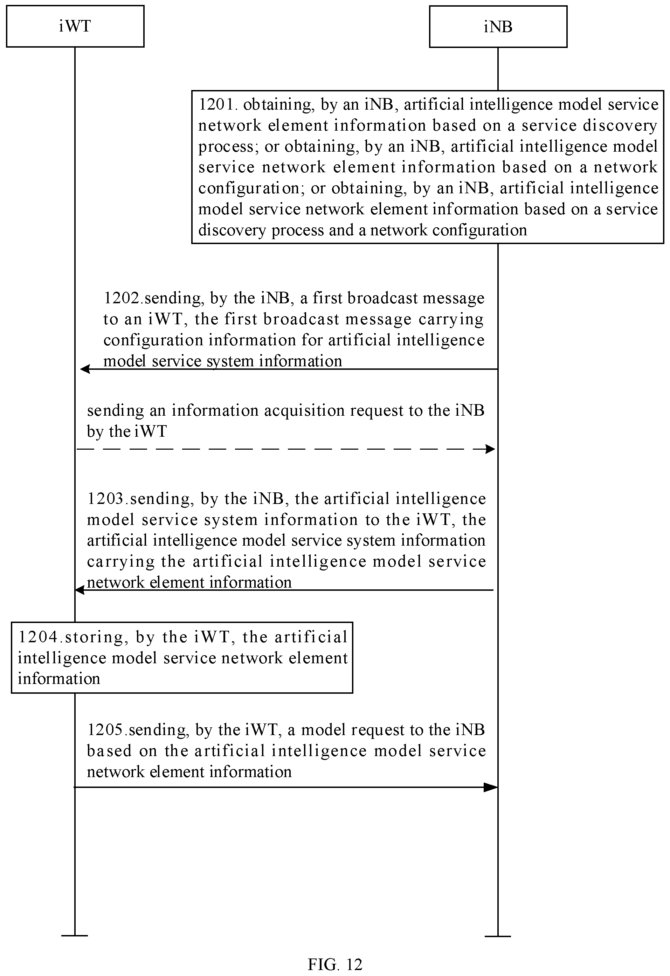

In an embodiment, referring to FIG. 12, an artificial intelligence model service discovery method is provided and used in the implementation environment shown in FIG. 7, and the method includes the following steps.

Step 1201: obtaining, by an iNB, artificial intelligence model service network element information based on a service discovery process; or, obtaining, by an iNB, artificial intelligence model service network element information based on a network configuration; or, obtaining, by an iNB, artificial intelligence model service network element information based on a service discovery process and a network configuration.

Step 1202: sending, by the iNB, a first broadcast message to an iWT, the first broadcast message carrying configuration information for artificial intelligence model service system information.

The configuration information is configured for indicating that the iNB supports an artificial intelligence model obtaining service.

The configuration information is further configured for indicating an obtaining manner of the artificial intelligence model service system information, and the obtaining manner of the artificial intelligence model service system information includes at least one of the following manners: the artificial intelligence model service system information is sent through a broadcast message based on a broadcast occasion applied to the artificial intelligence model service system information; or the artificial intelligence model service system information is sent based on a request of the iWT.

Step 1203: sending, by the iNB, the artificial intelligence model service system information to the iWT.

The artificial intelligence model service system information carries the artificial intelligence model service network element information. The artificial intelligence model service network element information includes an identifier of an artificial intelligence model service network element with which the iNB is capable of communicating and/or artificial intelligence model service capability information. The artificial intelligence model service network element is a network element capable of providing an artificial intelligence model in an intelligent radio access network. The artificial intelligence model service capability information is configured for indicating a limiting condition for obtaining of the artificial intelligence model from the iNB by the iWT.

The artificial intelligence model service network element information includes the identifiers of one or more artificial intelligence model service network elements; and/or, the identifier of any one of the artificial intelligence model service network elements in the artificial intelligence model service network element information corresponds to one or more pieces of artificial intelligence model service capability information.

The limiting condition indicated by the artificial intelligence model service capability information includes at least one of: a limiting condition determined based on a model providing capability of the artificial intelligence model service network element; or a limiting condition of the iNB on use of the model by the iWT.

The step 1203 includes the following two implementations.
1) In the case where the obtaining manner of the artificial intelligence model service system information is that the artificial intelligence model service system information is sent through the broadcast message, the iNB sends a second broadcast message based on the broadcast occasion applied to the artificial intelligence model service system information, the second broadcast message carrying the artificial intelligence model service system information. In this way, the iWT receives the second broadcast message sent by the iNB based on the broadcast occasion applied to the artificial intelligence model service system information, thereby obtaining the artificial intelligence model service system information.
2) In the case where it is determined, according to the configuration information, that the obtaining manner of the artificial intelligence model service system information is that the artificial intelligence model service system information is sent based on the request of the iWT, the iWT sends an information obtaining request to the iNB. The iNB receives the information obtaining request sent by the iWT, and sends the artificial intelligence model service system information to the iWT based on the information obtaining request, thus the iWT can receive the artificial intelligence model service system information sent by the iNB based on the information obtaining request.

Step 1204: storing, by the iWT, the artificial intelligence model service network element information.

Step 1205: sending, by the iWT, a model request to the iNB based on the artificial intelligence model service network element information.

The artificial intelligence model service discovery method according to the embodiment of the present application is described below in conjunction with two examples.

In the first example, it is assumed that the artificial intelligence model service network element information obtained by the iNB includes two identifiers of the artificial intelligence model service network elements with which the iNB is capable of communicating: one of the identifiers (AISS ID1) is represented by www.PDSCHDetectionEvaluation.server982.3gppnetwork in the URI form, and the artificial intelligence model service capability information corresponding to the identifier of the artificial intelligence model service network element is as follows: a Physical Downlink Shared Channel (PDSCH) detection & evaluation model for a PDSCH of a YLZC cell from 7 p.m. to 11 p.m. and a PDSCH detection & evaluation model for the PDSCH of the YLZC cell from 7 a.m. to 9 a.m. are supported.

The other of the identifiers (AISS ID2) is represented by www.PDCCHDetectionEvaluation.server982.3gppnetwork in the URI form, and the artificial intelligence model service capability information corresponding to the identifier of the artificial intelligence model service network element is as follows: a Physical Downlink Control Channel (PDCCH) detection & evaluation model for a PDCCH of the YLZC cell from 7 p.m. to 11 p.m. and a PDCCH detection & evaluation model for the PDCCH of the YLZC cell from 7 a.m. to 9 a.m. are supported.

It is assumed that the first broadcast message is System Information Block1, and the artificial intelligence model service system information is System Information Block17. The configuration information carried in the first broadcast message is as follows: the artificial intelligence model service system information is sent through the broadcast message based on the broadcast occasion.

It is assumed that the iWT requests an AISS2 capability1 model (the PDCCH detection & evaluation model for the PDCCH of the YLZC cell from 7 p.m. to 11 p.m.) under the AISS ID2.

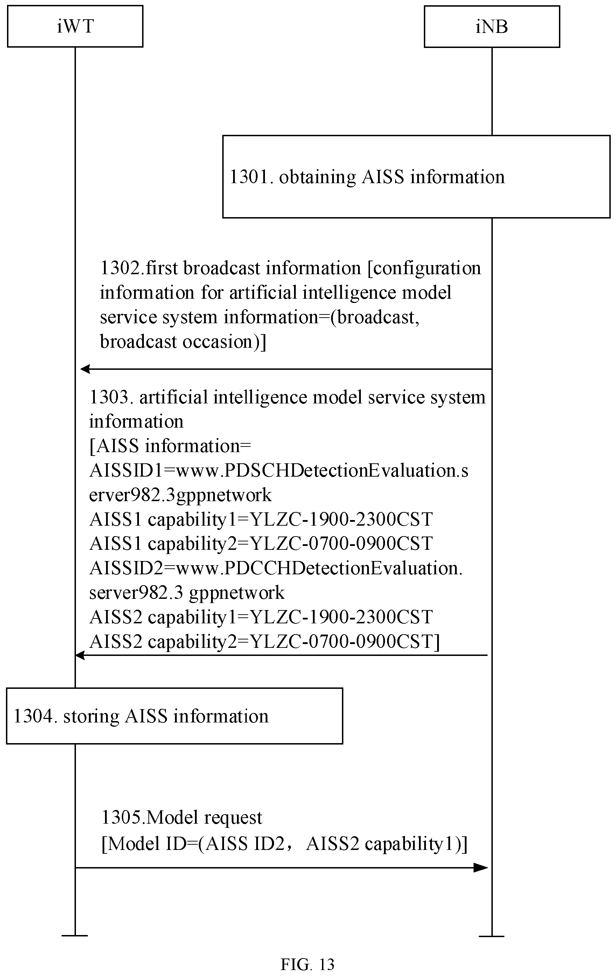

Referring to FIG. 13, the artificial intelligence model service discovery method according to this embodiment includes the following steps.

Step 1301: obtaining AISS information by the iNB.

The AISS information is the artificial intelligence model service network element information obtained by the iNB.

Step 1302: sending, by the iNB, the System Information Block1 to the iWT, a System Information Block17 configuration carried by the System Information Block1 being the broadcast and the broadcast occasion.

The System Information Block1 is the first broadcast message, and the System Information Block17 configuration refers to the configuration information of the artificial intelligence model service system information carried by the first broadcast message. The broadcast indicates sending through broadcast, and the broadcast occasion indicates the timing for broadcasting.

Step 1303: sending, by the iNB, the System Information Block17 to the iWT.

The AISS information carried by the System Information Block17 includes the following content:
1) AISS ID1=www.PDSCHDetectionEvaluation.server982.3gppnetwork
   AISS1 capability1=YLZC-1900-2300CST
   AISS1 capability2=YLZC-0700-0900CST
2) AISS ID2=www.PDCCHDetectionEvaluation.server982.3gppnetwork
   AISS2 capability1=YLZC-1900-2300CST
   AISS2 capability2=YLZC-0700-0900CST

The System Information Block17 refers to the artificial intelligence model service system information. The AISS ID1 refers to the identifier of one communicable artificial intelligence model service network element obtained by the iNB. The AISS1 capability1 and the AISS1 capability2 are respectively that the PDSCH detection & evaluation model for the PDSCH of the YLZC cell from 7 p.m. to 11 p.m. and the PDSCH detection & evaluation model for the PDSCH of the YLZC cell from 7 a.m. to 9 a.m. are supported.

The AISS ID2 refers to the identifier of the other communicable artificial intelligence model service network element obtained by the iNB, and the AISS2 capability1 and the AISS2 capability2 are respectively that the PDCCH detection & evaluation model for the PDCCH of the YLZC cell from 7 p.m. to 11 p.m. and the PDCCH detection & evaluation model for the PDCCH of the YLZC cell from 7 a.m. to 9 a.m are supported.

Step 1304: storing the AISS information by the iWT.

Step 1305: sending, by the iWT, the model request Model REQ to the iNB.

Model ID representing the model requested by the Model REQ is AISS ID2, AISS2 capability1, which represents that the PDCCH detection & evaluation model for the PDCCH of the YLZC cell from 7 p.m. to 11 p.m. corresponding to the AISS ID2 is requested.

2. In the second example, it is assumed that the artificial intelligence model service network element information obtained by the iNB includes one identifier of the artificial intelligence model service network element with which the iNB is capable of communicating: AISS ID1 is represented by www.AI-PDSCH.server908.3gppnetwork in the URI form, and the artificial intelligence model service capability information corresponding to the identifier of the artificial intelligence model service network element is as follows: Function ID + Scenario ID is supported, in which Function ID1=2902 and Scenario ID1= 08; Function ID2=1699, Scenario ID1=01, Scenario ID2=03, and values of the Function ID and the Scenario ID are standardized.

It is assumed that the first broadcast message is System Information Block1, and the artificial intelligence model service system information is System Information Block28. The configuration information carried in the first broadcast message is as follows: the artificial intelligence model service system information is sent based on the request of the iWT.

It is assumed that the iWT requests the model Function ID2, Scenario ID1 under the AISS ID1.

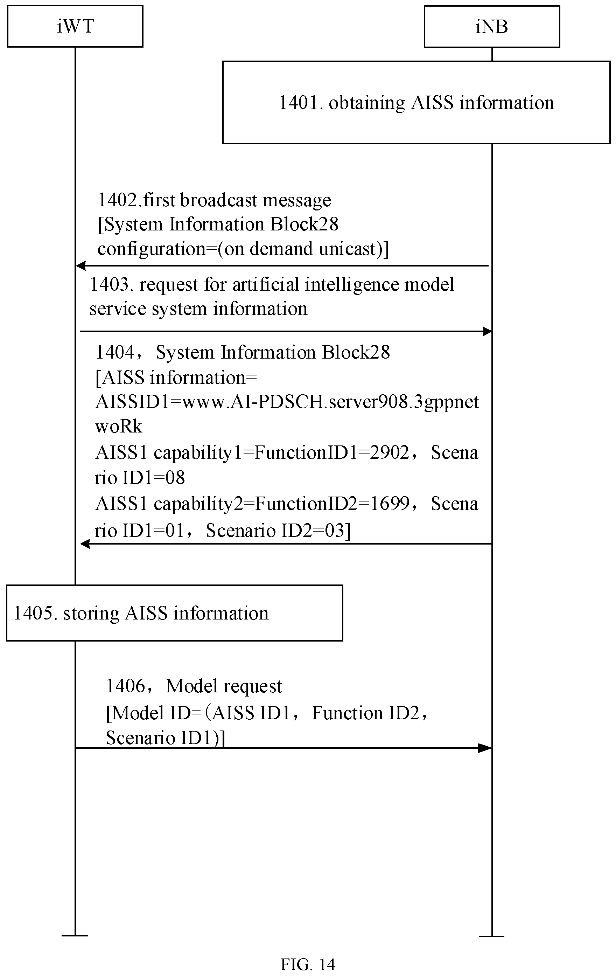

Referring to FIG. 14, the artificial intelligence model service discovery method according to this embodiment includes the following steps.

Step 1401: obtaining AISS information by the iNB.

The AISS information is the artificial intelligence model service network element information obtained by the iNB.

Step 1402: sending, by the iNB, the System Information Block1 to the iWT, a System Information Block28 configuration carried by the System Information Block1 being on demand unicast (that is, the artificial intelligence model service system information is sent based on the request of the iWT).

Step 1403: sending, by the iWT, System Information Block28 REQ (the request for the artificial intelligence model service system information) to the iNB.

Step 1404: sending, by the iNB, the System Information Block28 to the iWT.

The AISS information carried by the System Information Block28 includes:
AISS ID1=www.AI-PDSCH.server908.3gppnetwork
AISS1 capability1={Function ID1=2902, Scenario ID1=08};
AISS1 capability2={Function ID2=1699, Scenario ID1=01, Scenario ID2=03}.

Step 1405: storing the AISS information by the iWT.

Step 1406: sending, by the iWT, the model request Model REQ to the iNB.

Model ID representing the model requested by the Model REQ is: AISS ID1, Function ID2, Scenario ID1.

It should be understood that, although the steps in the above flow charts are shown in sequence as indicated by the arrows, the steps are not necessarily performed in sequence as indicated by the arrows. Unless explicitly stated herein, the steps are not limited to being performed in the exact order and may be performed in other orders. At least part of the steps in the above flow charts may include multiple steps or multiple stages, which are not necessarily performed at the same moment, but may be performed at different moments, and the steps or the stages are not necessarily performed in sequence, but may be performed alternately with other steps or at least part of the steps or the stages in other steps.

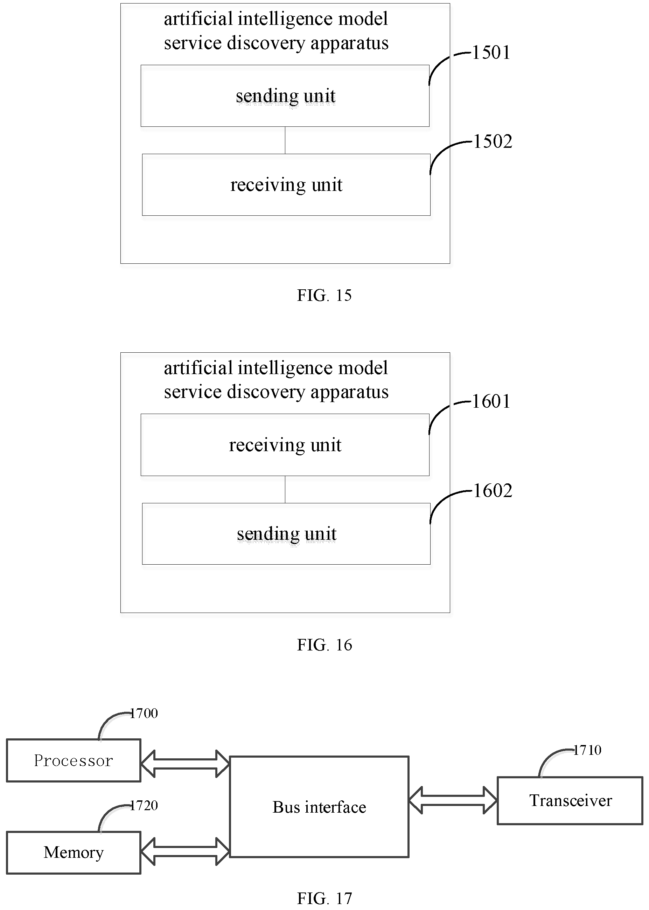

In an embodiment, as shown in FIG. 15, an artificial intelligence model service discovery apparatus is provided and applied in an iNB in an intelligent radio access network, and the apparatus includes:
a sending unit 1501 configured to send artificial intelligence model service network element information to an iWT, where the artificial intelligence model service network element information includes an identifier of an artificial intelligence model service network element with which the iNB is capable of communicating and/or artificial intelligence model service capability information, the artificial intelligence model service network element is a network element capable of providing an artificial intelligence model in the intelligent radio access network, and the artificial intelligence model service capability information is configured for indicating a limiting condition for obtaining of the artificial intelligence model from the iNB by the iWT; and
a receiving unit 1502 configured to receive a model request sent by the iWT based on the artificial intelligence model service network element information.

In an embodiment, the apparatus further includes:
an obtaining unit configured to: obtain the artificial intelligence model service network element information based on a service discovery process; or, obtain the artificial intelligence model service network element information based on a network configuration; or, obtain the artificial intelligence model service network element information based on a service discovery process and a network configuration.

In an embodiment, the artificial intelligence model service network element information includes the identifiers of one or more artificial intelligence model service network elements; and/or,
the identifier of any one of the artificial intelligence model service network elements in the artificial intelligence model service network element information corresponds to one or more pieces of artificial intelligence model service capability information.

In an embodiment, the limiting condition indicated by the artificial intelligence model service capability information includes at least one of:
a limiting condition determined based on a model providing capability of the artificial intelligence model service network element; or
a limiting condition of the iNB on use of the model by the iWT.

In an embodiment, the sending unit 1501 is specifically configured to send artificial intelligence model service system information to the iWT, the artificial intelligence model service system information carrying the artificial intelligence model service network element information.

In an embodiment, the sending unit 1501 is further configured to send configuration information for the artificial intelligence model service system information to the iWT, the configuration information being configured for indicating that the iNB supports an artificial intelligence model obtaining service.

In an embodiment, the sending unit 1501 is specifically configured to send a first broadcast message, the first broadcast message carrying the configuration information.

In an embodiment, the configuration information is further configured for indicating an obtaining manner of the artificial intelligence model service system information.

In an embodiment, the obtaining manner of the artificial intelligence model service system information includes at least one of the following manners:
the artificial intelligence model service system information is sent through a broadcast message based on a broadcast occasion applied to the artificial intelligence model service system information; or
the artificial intelligence model service system information is sent based on a request of the iWT.

In an embodiment, the sending unit 1501 is specifically configured to, in the case where the obtaining manner of the artificial intelligence model service system information is that the artificial intelligence model service system information is sent through the broadcast message, send a second broadcast message based on the broadcast occasion applied to the artificial intelligence model service system information, the second broadcast message carrying the artificial intelligence model service system information.

In an embodiment, the receiving unit 1502 is specifically configured to, in the case where the obtaining manner of the artificial intelligence model service system information is that the artificial intelligence model service system information is sent based on the request of the iWT, receive an information obtaining request sent by the iWT; and
the sending unit 1501 is specifically configured to send the artificial intelligence model service system information to the iWT based on the information obtaining request.

Specific definitions of the artificial intelligence model service discovery apparatus may be referred to the definitions of the artificial intelligence model service discovery method applied in the iNB described above, which are not repeated herein. The modules in the above artificial intelligence model service discovery apparatus may be implemented in whole or in part by software, hardware and a combination thereof. The modules may be embedded in or independent of a processor in the iNB in a form of hardware, or may be stored in a memory in the iNB in a form of software, so that the processor can conveniently call the modules to execute the operations corresponding to the modules.

In an embodiment, as shown in FIG. 16, an artificial intelligence model service discovery apparatus is provided and used in an iWT in an intelligent radio access network, and the apparatus includes:
a receiving unit 1601 configured to receive artificial intelligence model service network element information sent by an iNB, where the artificial intelligence model service network element information includes an identifier of an artificial intelligence model service network element with which the iNB is capable of communicating and/or artificial intelligence model service capability information, the artificial intelligence model service network element is a network element capable of providing an artificial intelligence model in an intelligent radio access network, and the artificial intelligence model service capability information is configured for indicating a limiting condition for obtaining of the artificial intelligence model from the iNB by the iWT; and
a sending unit 1602 configured to send a model request to the iNB based on the artificial intelligence model service network element information.

In an embodiment, the artificial intelligence model service network element information includes the identifiers of one or more artificial intelligence model service network elements; and/or,
the identifier of any one of the artificial intelligence model service network elements in the artificial intelligence model service network element information corresponds to one or more pieces of artificial intelligence model service capability information.

In an embodiment, the limiting condition indicated by the artificial intelligence model service capability information includes at least one of:
a limiting condition determined based on a model providing capability of the artificial intelligence model service network element; or
a limiting condition of the iNB on use of the model by the iWT.

In an embodiment, the receiving unit 1601 is specifically configured to receive artificial intelligence model service system information sent by the iNB, the artificial intelligence model service system information carrying the artificial intelligence model service network element information.

In an embodiment, the receiving unit 1601 is further configured to receive configuration information for the artificial intelligence model service system information sent by the iNB, the configuration information being configured for indicating that the iNB supports an artificial intelligence model obtaining service.

In an embodiment, the receiving unit 1601 is specifically configured to receive a first broadcast message sent by the iNB, the first broadcast message carrying the configuration information.

In an embodiment, the configuration information is further configured for indicating an obtaining manner of the artificial intelligence model service system information.

In an embodiment, the obtaining manner of the artificial intelligence model service system information includes at least one of the following manners:
the artificial intelligence model service system information is sent through a broadcast message based on a broadcast occasion applied to the artificial intelligence model service system information; or
the artificial intelligence model service system information is sent based on a request of the iWT.

In an embodiment, the receiving unit 1601 is specifically configured to, in the case where it is determined, according to the configuration information, that the obtaining manner of the artificial intelligence model service system information is that the artificial intelligence model service system information is sent through the broadcast message, receive a second broadcast message sent by the iNB based on the broadcast occasion applied to the artificial intelligence model service system information, the second broadcast message carrying the artificial intelligence model service system information.

In an embodiment, the sending unit 1602 is specifically configured to, in the case where it is determined, according to the configuration information, that the obtaining manner of the artificial intelligence model service system information is that the artificial intelligence model service system information is sent based on the request of the iWT, send an information obtaining request to the iNB; and
the receiving unit 1601 is specifically configured to receive the artificial intelligence model service system information sent by the iNB based on the information obtaining request.

Specific definitions of the artificial intelligence model service discovery apparatus may be referred to the definitions of the artificial intelligence model service discovery method applied in the iWT described above which are not repeated herein. The modules in the above artificial intelligence model service discovery apparatus may be implemented in whole or in part by software, hardware and a combination thereof. The modules may be embedded in or independent of a processor in the iWT in hardware, or may be stored in a memory in the iWT in software, so that the processor can conveniently call the modules to execute the operations corresponding to the modules.

FIG. 17 is a schematic structural diagram of an intelligent base station (iNB) according to an embodiment of the present application. The iNB may include a processor 1700, a transceiver 1710 and a memory 1720. The transceiver 1710 is configured to receive and send data under control of the processor 1700.

In FIG. 17, a bus architecture may include any number of interconnected buses and bridges, which specifically link various circuits of one or more processors represented by the processor 1700 and memories represented by the memory 1720 together. The bus architecture may also link together various other circuits such as peripherals, voltage regulators, and power management circuits, which are well known in the art, and therefore, will not be further described herein. A bus interface provides an interface.

The transceiver 1710 may be a number of elements, that is, include a transmitter and a receiver, and provide a unit for communication with various other apparatuses over transmission media including wireless channels, wired channels, fiber optic cables, or the like. The processor 1700 is responsible for managing the bus architecture and general processing, and the memory 1720 may store data used when the processor 1700 performs operations.

The processor 1700 may be a Central Processing Unit (CPU), an Application Specific Integrated Circuit (ASIC), a Field-Programmable Gate Array (FPGA), or a Complex Programmable Logic Device (CPLD), and may also adopt a multi-core architecture.

The processor 1700 is configured to execute the following steps according to obtained executable instructions by calling a program stored in the memory 1720:
controlling the transceiver 1710 to send artificial intelligence model service network element information to an iWT, where the artificial intelligence model service network element information includes an identifier of an artificial intelligence model service network element with which the iNB is capable of communicating and/or artificial intelligence model service capability information, the artificial intelligence model service network element is a network element capable of providing an artificial intelligence model in an intelligent radio access network, and the artificial intelligence model service capability information is configured for indicating a limiting condition for obtaining of the artificial intelligence model from the iNB by the iWT; and
controlling the transceiver 1710 to receive a model request sent by the iWT based on the artificial intelligence model service network element information.

In an embodiment, the processor 1700 is specifically configured to perform the following operation:
obtaining the artificial intelligence model service network element information based on a service discovery process; or
obtaining the artificial intelligence model service network element information based on a network configuration; or
obtaining the artificial intelligence model service network element information based on a service discovery process and a network configuration.

In an embodiment, the artificial intelligence model service network element information includes the identifiers of one or more artificial intelligence model service network elements; and/or,
the identifier of any one of the artificial intelligence model service network elements in the artificial intelligence model service network element information corresponds to one or more pieces of artificial intelligence model service capability information.

In an embodiment, the limiting condition indicated by the artificial intelligence model service capability information includes at least one of:
a limiting condition determined based on a model providing capability of the artificial intelligence model service network element; or
a limiting condition of the iNB on use of the model by the iWT.

In an embodiment, the processor 1700 is specifically configured to perform the following operation:
controlling the transceiver 1710 to send artificial intelligence model service system information to the iWT, the artificial intelligence model service system information carrying the artificial intelligence model service network element information.

In an embodiment, the processor 1700 is specifically configured to perform the following operation:
controlling the transceiver 1710 to send configuration information for the artificial intelligence model service system information to the iWT, the configuration information being configured for indicating that the iNB supports an artificial intelligence model obtaining service.

In an embodiment, the processor 1700 is specifically configured to perform the following operation:
controlling the transceiver 1710 to send a first broadcast message, the first broadcast message carrying the configuration information.

In an embodiment, the configuration information is further configured for indicating an obtaining manner of the artificial intelligence model service system information.

In an embodiment, the obtaining manner of the artificial intelligence model service system information includes at least one of the following manners:
the artificial intelligence model service system information is sent through a broadcast message based on a broadcast occasion applied to the artificial intelligence model service system information; or
the artificial intelligence model service system information is sent based on a request of the iWT.

In an embodiment, the processor 1700 is specifically configured to perform the following operation:
in the case where the obtaining manner of the artificial intelligence model service system information is that the artificial intelligence model service system information is sent through the broadcast message, controlling the transceiver 1710 to send a second broadcast message based on the broadcast occasion applied to the artificial intelligence model service system information, the second broadcast message carrying the artificial intelligence model service system information.

In an embodiment, the processor 1700 is specifically configured to perform the following operation:
in the case where the obtaining manner of the artificial intelligence model service system information is that the artificial intelligence model service system information is sent based on the request of the iWT, controlling the transceiver 1710 to receive an information obtaining request sent by the iWT, and send the artificial intelligence model service system information to the iWT based on the information obtaining request.

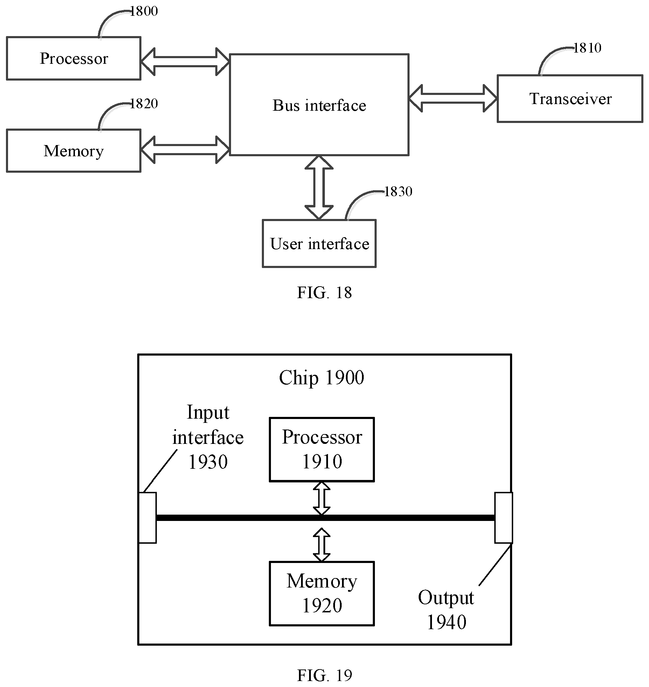

In an embodiment, FIG. 18 is a schematic structural diagram of an intelligent wireless terminal according to an embodiment of the present application. The intelligent wireless terminal shown in FIG. 18 includes a processor 1800, a transceiver 1810, a memory 1820 and a user interface 1830. The transceiver 1810 is configured to receive and send data under control of the processor 1800.

In FIG. 18, a bus architecture may include any number of interconnected buses and bridges, which specifically link various circuits of one or more processors represented by the processor 1800 and memories represented by the memory 1820 together. The bus architecture may also link together various other circuits such as peripherals, voltage regulators, and power management circuits, which are well known in the art, and therefore, will not be further described herein. A bus interface provides an interface.

The transceiver 1810 may be a number of elements, that is, include a transmitter and a receiver, and provide a unit for communication with various other apparatuses over transmission media including wireless channels, wired channels, fiber optic cables, or the like. For different intelligent wireless terminals, the user interface 1830 may be an interface capable of externally or internally connecting connected devices, and the connected devices include, but are not limited to, a keypad, a display, a loudspeaker, a microphone, a joystick, or the like.

The processor 1800 is responsible for managing the bus architecture and general processing, and the memory 1820 may store data used when the processor 1800 performs operations.

Optionally, the processor 1800 may be a Central Processing Unit (CPU), an Application Specific Integrated Circuit (ASIC), a Field-Programmable Gate Array (FPGA), or a Complex Programmable Logic Device (CPLD), and may also adopt a multi-core architecture.

The processor 1800 is configured to execute the following steps according to obtained executable instructions by calling a program stored in the memory 1820:
controlling the transceiver 1810 to receive artificial intelligence model service network element information sent by an iNB, where the artificial intelligence model service network element information includes an identifier of an artificial intelligence model service network element with which the iNB is capable of communicating and/or artificial intelligence model service capability information, the artificial intelligence model service network element is a network element capable of providing an artificial intelligence model in an intelligent radio access network, and the artificial intelligence model service capability information is configured for indicating a limiting condition for obtaining of the artificial intelligence model from the iNB by the iWT; and
controlling the transceiver 1810 to send a model request to the iNB based on the artificial intelligence model service network element information.

In an embodiment, the artificial intelligence model service network element information includes the identifiers of one or more artificial intelligence model service network elements; and/or,
the identifier of any one of the artificial intelligence model service network elements in the artificial intelligence model service network element information corresponds to one or more pieces of artificial intelligence model service capability information.

In an embodiment, the limiting condition indicated by the artificial intelligence model service capability information includes at least one of:
a limiting condition determined based on a model providing capability of the artificial intelligence model service network element; or
a limiting condition of the iNB on use of the model by the iWT.

In an embodiment, the processor 1800 is specifically configured to perform the following operation:
controlling the transceiver 1810 to receive artificial intelligence model service system information sent by the iNB, the artificial intelligence model service system information carrying the artificial intelligence model service network element information.

In an embodiment, the processor 1800 is specifically configured to perform the following operation:
controlling the transceiver 1810 to receive configuration information for the artificial intelligence model service system information sent by the iNB, the configuration information being configured for indicating that the iNB supports an artificial intelligence model obtaining service.

In an embodiment, the processor 1800 is specifically configured to perform the following operation:
controlling the transceiver 1810 to receive a first broadcast message sent by the iNB, the first broadcast message carrying the configuration information.

In an embodiment, the configuration information is further configured for indicating an obtaining manner of the artificial intelligence model service system information.

In an embodiment, the obtaining manner of the artificial intelligence model service system information includes at least one of the following manners:
the artificial intelligence model service system information is sent through a broadcast message based on a broadcast occasion applied to the artificial intelligence model service system information; or
the artificial intelligence model service system information is sent based on a request of the iWT.

In an embodiment, the processor 1800 is specifically configured to perform the following operation:
in the case where it is determined, according to the configuration information, that the obtaining manner of the artificial intelligence model service system information is that the artificial intelligence model service system information is sent through the broadcast message, controlling the transceiver 1810 to receive a second broadcast message sent by the iNB based on the broadcast occasion applied to the artificial intelligence model service system information, the second broadcast message carrying the artificial intelligence model service system information.

In an embodiment, the processor 1800 is specifically configured to perform the following operation:
in the case where it is determined, according to the configuration information, that the obtaining manner of the artificial intelligence model service system information is that the artificial intelligence model service system information is sent based on the request of the iWT, controlling the transceiver 1810 to send an information obtaining request to the iNB; and
controlling the transceiver 1810 to receive the artificial intelligence model service system information sent by the iNB based on the information obtaining request.

In an embodiment, there is provided a computer-readable storage medium having a computer program stored thereon, the computer program, when executed by a processor, implementing the following steps:
sending artificial intelligence model service network element information to an intelligent wireless terminal (iWT), where the artificial intelligence model service network element information includes an identifier of an artificial intelligence model service network element with which the iNB is capable of communicating and/or artificial intelligence model service capability information, the artificial intelligence model service network element is a network element capable of providing an artificial intelligence model in the intelligent radio access network, and the artificial intelligence model service capability information is configured for indicating a limiting condition for obtaining of the artificial intelligence model from the iNB by the iWT; and
receiving a model request sent by the iWT based on the artificial intelligence model service network element information.

In an embodiment, the computer program, when executed by the processor, also implements the following step:
obtaining the artificial intelligence model service network element information based on a service discovery process; or
obtaining the artificial intelligence model service network element information based on a network configuration; or
obtaining the artificial intelligence model service network element information based on a service discovery process and a network configuration.

In an embodiment, the artificial intelligence model service network element information includes the identifiers of one or more artificial intelligence model service network elements; and/or, the identifier of any one of the artificial intelligence model service network elements in the artificial intelligence model service network element information corresponds to one or more pieces of artificial intelligence model service capability information.

In an embodiment, the limiting condition indicated by the artificial intelligence model service capability information includes at least one of:
a limiting condition determined based on a model providing capability of the artificial intelligence model service network element; or
a limiting condition of the iNB on use of the model by the iWT.

In an embodiment, the computer program, when executed by the processor, specifically implements the following step:
sending artificial intelligence model service system information to the iWT, the artificial intelligence model service system information carrying the artificial intelligence model service network element information.

In an embodiment, the computer program, when executed by the processor, also implements the following step:
sending configuration information for the artificial intelligence model service system information to the iWT, the configuration information being configured for indicating that the iNB supports an artificial intelligence model obtaining service.

In an embodiment, the computer program, when executed by the processor, specifically implements the following step:
sending a first broadcast message, the first broadcast message carrying the configuration information.

In an embodiment, the configuration information is further configured for indicating an obtaining manner of the artificial intelligence model service system information.

In an embodiment, the obtaining manner of the artificial intelligence model service system information includes at least one of the following manners:
the artificial intelligence model service system information is sent through a broadcast message based on a broadcast occasion applied to the artificial intelligence model service system information; or
the artificial intelligence model service system information is sent based on a request of the iWT.

In an embodiment, the computer program, when executed by the processor, specifically implements the following step:
in the case where the obtaining manner of the artificial intelligence model service system information is that the artificial intelligence model service system information is sent through the broadcast message, sending a second broadcast message based on the broadcast occasion applied to the artificial intelligence model service system information, the second broadcast message carrying the artificial intelligence model service system information.

In an embodiment, the computer program, when executed by the processor, specifically implements the following step:
in the case where the obtaining manner of the artificial intelligence model service system information is that the artificial intelligence model service system information is sent based on the request of the iWT, receiving an information obtaining request sent by the iWT, and sending, by the iNB, the artificial intelligence model service system information to the iWT based on the information obtaining request.

In an embodiment, there is provided a computer-readable storage medium having a computer program stored thereon, the computer program, when executed by a processor, implementing the following steps:
receiving artificial intelligence model service network element information sent by an iNB, where the artificial intelligence model service network element information includes an identifier of an artificial intelligence model service network element with which the iNB is capable of communicating and/or artificial intelligence model service capability information, the artificial intelligence model service network element is a network element capable of providing an artificial intelligence model in an intelligent radio access network, and the artificial intelligence model service capability information is configured for indicating a limiting condition for obtaining of the artificial intelligence model from the iNB by the iWT; and
sending a model request to the iNB based on the artificial intelligence model service network element information.

In an embodiment, the artificial intelligence model service network element information includes the identifiers of one or more artificial intelligence model service network elements; and/or,
the identifier of any one of the artificial intelligence model service network elements in the artificial intelligence model service network element information corresponds to one or more pieces of artificial intelligence model service capability information.

In an embodiment, the limiting condition indicated by the artificial intelligence model service capability information includes at least one of:
a limiting condition determined based on a model providing capability of the artificial intelligence model service network element; or
a limiting condition of the iNB on use of the model by the iWT.

In an embodiment, the computer program, when executed by the processor, specifically implements the following step:
receiving artificial intelligence model service system information sent by the iNB, the artificial intelligence model service system information carrying the artificial intelligence model service network element information.

In an embodiment, the computer program, when executed by the processor, also implements the following step:
receiving configuration information for the artificial intelligence model service system information sent by the iNB, the configuration information being configured for indicating that the iNB supports an artificial intelligence model obtaining service.

In an embodiment, the computer program, when executed by the processor, specifically implements the following step:
receiving a first broadcast message sent by the iNB, the first broadcast message carrying the configuration information.

In an embodiment, the configuration information is further configured for indicating an obtaining manner of the artificial intelligence model service system information.

In an embodiment, the obtaining manner of the artificial intelligence model service system information includes at least one of the following manners:
the artificial intelligence model service system information is sent through a broadcast message based on a broadcast occasion applied to the artificial intelligence model service system information; or
the artificial intelligence model service system information is sent based on a request of the iWT.

In an embodiment, the computer program, when executed by the processor, specifically implements the following step:
in the case where it is determined, according to the configuration information, that the obtaining manner of the artificial intelligence model service system information is that the artificial intelligence model service system information is sent through the broadcast message, receiving a second broadcast message sent by the iNB based on the broadcast occasion applied to the artificial intelligence model service system information, the second broadcast message carrying the artificial intelligence model service system information.

In an embodiment, the computer program, when executed by the processor, specifically implements the following steps:
in the case where it is determined, according to the configuration information, that the obtaining manner of the artificial intelligence model service system information is that the artificial intelligence model service system information is sent based on the request of the iWT, sending an information obtaining request to the iNB; and
receiving the artificial intelligence model service system information sent by the iNB based on the information obtaining request.

FIG. 19 is a schematic structural diagram of a chip according to an embodiment of the present application. The chip 1900 shown in FIG. 19 includes a processor 1910, and the processor 1910 can call a computer program from a memory and run the program to implement the method according to the embodiment of the present application.

Optionally, as shown in FIG. 19, the chip 1900 may further include the memory 1920. The processor 1910 can call the computer program from the memory 1920 and run the program to implement the method according to the embodiment of the present application.

The memory 1920 may be a separate device from the processor 1910, or may be integrated in the processor 1910.

Optionally, the chip 1900 may further include an input interface 1930. The processor 1910 may control the input interface 1930 to communicate with other devices or chips, and specifically, may obtain information or data sent by the other devices or chips.

Optionally, the chip 1900 may further include an output interface 1940. The processor 1910 may control the output interface 1940 to communicate with other devices or chips, and specifically, may output information or data to the other devices or chips.

Optionally, the chip 1900 may be applied to a network element device in the embodiment of the present application, and the chip 1900 may implement corresponding processes implemented in each method according to the embodiment of the present application, which are not repeated herein for brevity.

It should be understood that the chip 1900 according to the embodiment of the present application may also be referred to as a system-on-chip, or the like.

It will be understood by those skilled in the art that all or part of the processes of the method according to the embodiments described above may be implemented by a computer program instructing related hardware, and the computer program may be stored in a non-transitory computer-readable storage medium, and when executed, may include the processes of the embodiments of the method described above. Any reference to memories, storage, databases or other media used in the embodiments of the present application can include at least one of a non-transitory memory and a transitory memory. The non-transitory memory may include a Read-Only Memory (ROM), magnetic tape, a floppy disk, a flash memory, an optical memory, or the like. The transitory memory can include a Random Access Memory (RAM) or an external cache memory. By way of illustration and not limitation, the RAM can take many forms such as a Static Random Access Memory (SRAM) and a Dynamic Random Access Memory (DRAM).

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the specification.

The above-described embodiments are only several implementations of the present application, and the descriptions are relatively specific and detailed, but they should not be construed as limiting the present application. It should be understood by those of ordinary skill in the art that various modifications and improvements can be made without departing from the concept of the present application, and all fall within the protection scope of the present application. Therefore, the protection scope of the present application should be subject to the appended claims.

## Claims

1. An artificial intelligence model service discovery method applied in an intelligent base station, iNB, comprising:
sending, by the iNB, artificial intelligence model service network element information to an intelligent wireless terminal, iWT, wherein the artificial intelligence model service network element information comprises an identifier of an artificial intelligence model service network element with which the iNB is capable of communicating and/or artificial intelligence model service capability information, the artificial intelligence model service network element is a network element capable of providing an artificial intelligence model in an intelligent radio access network, and the artificial intelligence model service capability information is configured for indicating a limiting condition for obtaining of the artificial intelligence model from the iNB by the iWT; and
receiving, by the iNB, a model request sent by the iWT based on the artificial intelligence model service network element information.

2. The method according to claim 1, further comprising:
obtaining, by the iNB, the artificial intelligence model service network element information based on a service discovery process; or
obtaining, by the iNB, the artificial intelligence model service network element information based on a network configuration; or
obtaining, by the iNB, the artificial intelligence model service network element information based on a service discovery process and a network configuration.

3. The method according to claim 1, wherein the artificial intelligence model service network element information comprises the identifiers of one or more artificial intelligence model service network elements; and/or
the identifier of any one of the artificial intelligence model service network elements in the artificial intelligence model service network element information corresponds to one or more pieces of artificial intelligence model service capability information.

4. The method according to claim 1, wherein the limiting condition indicated by the artificial intelligence model service capability information comprises at least one of:
a limiting condition determined based on a model providing capability of the artificial intelligence model service network element; or
a limiting condition of the iNB on use of the model by the iWT.

5. The method according to claim 1, wherein sending, by the iNB, the artificial intelligence model service network element information to the iWT comprises:
sending, by the iNB, artificial intelligence model service system information to the iWT, the artificial intelligence model service system information carrying the artificial intelligence model service network element information.

6. The method according to claim 5, wherein before sending, by the iNB, the artificial intelligence model service system information to the iWT, the method further comprises:
sending, by the iNB, configuration information for the artificial intelligence model service system information to the iWT, the configuration information being configured for indicating that the iNB supports an artificial intelligence model obtaining service.

7. The method according to claim 6, wherein sending, by the iNB, the configuration information for the artificial intelligence model service system information to the iWT comprises:
sending a first broadcast message by the iNB, the first broadcast message carrying the configuration information.

8. The method according to claim 6, wherein the configuration information is further configured for indicating an obtaining manner of the artificial intelligence model service system information.

9. The method according to claim 8, wherein the obtaining manner of the artificial intelligence model service system information comprises at least one of the following manners:
the artificial intelligence model service system information is sent through a broadcast message based on a broadcast occasion applied to the artificial intelligence model service system information; or
the artificial intelligence model service system information is sent based on a request of the iWT.

10. The method according to claim 9, wherein sending, by the iNB, the artificial intelligence model service system information to the iWT comprises:
in the case where the obtaining manner of the artificial intelligence model service system information is that the artificial intelligence model service system information is sent through the broadcast message, sending, by the iNB, a second broadcast message based on the broadcast occasion applied to the artificial intelligence model service system information, the second broadcast message carrying the artificial intelligence model service system information.

11. The method according to claim 9, wherein sending, by the iNB, the artificial intelligence model service system information to the iWT comprises:
in the case where the obtaining manner of the artificial intelligence model service system information is that the artificial intelligence model service system information is sent based on the request of the iWT, receiving, by the iNB, an information obtaining request sent by the iWT, and sending, by the iNB, the artificial intelligence model service system information to the iWT based on the information obtaining request.

12. An artificial intelligence model service discovery method applied in an iWT, comprising:
receiving, by the iWT, artificial intelligence model service network element information sent by an iNB, wherein the artificial intelligence model service network element information comprises an identifier of an artificial intelligence model service network element with which the iNB is capable of communicating and/or artificial intelligence model service capability information, the artificial intelligence model service network element is a network element capable of providing an artificial intelligence model in an intelligent radio access network, and the artificial intelligence model service capability information is configured for indicating a limiting condition for obtaining of the artificial intelligence model from the iNB by the iWT; and
sending, by the iWT, a model request to the iNB based on the artificial intelligence model service network element information.

13. The method according to claim 12, wherein the artificial intelligence model service network element information comprises the identifiers of one or more artificial intelligence model service network elements; and/or
the identifier of any one of the artificial intelligence model service network elements in the artificial intelligence model service network element information corresponds to one or more pieces of artificial intelligence model service capability information.

14. The method according to claim 12, wherein the limiting condition indicated by the artificial intelligence model service capability information comprises at least one of:
a limiting condition determined based on a model providing capability of the artificial intelligence model service network element; or
a limiting condition of the iNB on use of the model by the iWT.

15. The method according to claim 12, wherein receiving, by the iWT, the artificial intelligence model service network element information sent by the iNB comprises:
receiving, by the iWT, artificial intelligence model service system information sent by the iNB, the artificial intelligence model service system information carrying the artificial intelligence model service network element information.

16. The method according to claim 15, wherein before receiving, by the iWT, the artificial intelligence model service system information sent by the iNB, the method further comprises:
receiving, by the iWT, configuration information for the artificial intelligence model service system information sent by the iNB, the configuration information being configured for indicating that the iNB supports an artificial intelligence model obtaining service.

17. The method according to claim 16, wherein receiving, by the iWT, the configuration information for the artificial intelligence model service system information sent by the iNB comprises:
receiving, by the iWT, a first broadcast message sent by the iNB, the first broadcast message carrying the configuration information.

18. The method according to claim 17, wherein the configuration information is further configured for indicating an obtaining manner of the artificial intelligence model service system information.

19. The method according to claim 18, wherein the obtaining manner of the artificial intelligence model service system information comprises at least one of the following manners:
the artificial intelligence model service system information is sent through a broadcast message based on a broadcast occasion applied to the artificial intelligence model service system information; or
the artificial intelligence model service system information is sent based on a request of the iWT.

20. The method according to claim 19, wherein receiving, by the iWT, the artificial intelligence model service system information sent by the iNB comprises:in the case where it is determined, according to the configuration information, that the obtaining manner of the artificial intelligence model service system information is that the artificial intelligence model service system information is sent through the broadcast message, receiving, by the iWT, a second broadcast message sent by the iNB based on the broadcast occasion applied to the artificial intelligence model service system information, the second broadcast message carrying the artificial intelligence model service system information.

21. The method according to claim 19, wherein receiving, by the iWT, the artificial intelligence model service system information sent by the iNB comprises:
in the case where it is determined, according to the configuration information, that the obtaining manner of the artificial intelligence model service system information is that the artificial intelligence model service system information is sent based on the request of the iWT, sending an information obtaining request to the iNB by the iWT; and
receiving, by the iWT, the artificial intelligence model service system information sent by the iNB based on the information obtaining request.

22. An artificial intelligence model service discovery apparatus applied in an iNB, comprising:
a sending unit configured to send artificial intelligence model service network element information to an iWT, wherein the artificial intelligence model service network element information comprises an identifier of an artificial intelligence model service network element with which the iNB is capable of communicating and/or artificial intelligence model service capability information, the artificial intelligence model service network element is a network element capable of providing an artificial intelligence model in the intelligent radio access network, and the artificial intelligence model service capability information is configured for indicating a limiting condition for obtaining of the artificial intelligence model from the iNB by the iWT; and
a receiving unit configured to receive a model request sent by the iWT based on the artificial intelligence model service network element information.

23. The apparatus according to claim 22, further comprising:
an obtaining unit configured to: obtain the artificial intelligence model service network element information based on a service discovery process; or obtain the artificial intelligence model service network element information based on a network configuration; or obtain the artificial intelligence model service network element information based on a service discovery process and a network configuration.

24. The apparatus according to claim 22, wherein the artificial intelligence model service network element information comprises the identifiers of one or more artificial intelligence model service network elements; and/or,
the identifier of any one of the artificial intelligence model service network elements in the artificial intelligence model service network element information corresponds to one or more pieces of artificial intelligence model service capability information.

25. The apparatus according to claim 22, wherein the limiting condition indicated by the artificial intelligence model service capability information comprises at least one of:
a limiting condition determined based on a model providing capability of the artificial intelligence model service network element; or
a limiting condition of the iNB on use of the model by the iWT.

26. The apparatus according to claim 22, wherein the sending unit is specifically configured to send artificial intelligence model service system information to the iWT, the artificial intelligence model service system information carrying the artificial intelligence model service network element information.

27. The apparatus according to claim 26, wherein the sending unit is further configured to send configuration information for the artificial intelligence model service system information to the iWT, the configuration information being configured for indicating that the iNB supports an artificial intelligence model obtaining service.

28. The apparatus according to claim 27, wherein the sending unit is specifically configured to send a first broadcast message, the first broadcast message carrying the configuration information.

29. The apparatus according to claim 27, wherein the configuration information is further configured for indicating an obtaining manner of the artificial intelligence model service system information.

30. The apparatus according to claim 29, wherein the obtaining manner of the artificial intelligence model service system information comprises at least one of the following manners:
the artificial intelligence model service system information is sent through a broadcast message based on a broadcast occasion applied to the artificial intelligence model service system information; or
the artificial intelligence model service system information is sent based on a request of the iWT.

31. The apparatus according to claim 30, wherein the sending unit is specifically configured to, in the case where the obtaining manner of the artificial intelligence model service system information is that the artificial intelligence model service system information is sent through the broadcast message, send a second broadcast message based on the broadcast occasion applied to the artificial intelligence model service system information, the second broadcast message carrying the artificial intelligence model service system information.

32. The apparatus according to claim 30, wherein the receiving unit is specifically configured to, in the case where the obtaining manner of the artificial intelligence model service system information is that the artificial intelligence model service system information is sent based on the request of the iWT, receive an information obtaining request sent by the iWT; and the sending unit is specifically configured to send the artificial intelligence model service system information to the iWT based on the information obtaining request.

33. An artificial intelligence model service discovery apparatus applied in an iWT, comprising:
a receiving unit configured to receive artificial intelligence model service network element information sent by an iNB, wherein the artificial intelligence model service network element information comprises an identifier of an artificial intelligence model service network element with which the iNB is capable of communicating and/or artificial intelligence model service capability information, the artificial intelligence model service network element is a network element capable of providing an artificial intelligence model in an intelligent radio access network, and the artificial intelligence model service capability information is configured for indicating a limiting condition for obtaining of the artificial intelligence model from the iNB by the iWT; and
a sending unit configured to send a model request to the iNB based on the artificial intelligence model service network element information.

34. The apparatus according to claim 33, wherein the artificial intelligence model service network element information comprises the identifiers of one or more artificial intelligence model service network elements; and/or,
the identifier of any one of the artificial intelligence model service network elements in the artificial intelligence model service network element information corresponds to one or more pieces of artificial intelligence model service capability information.

35. The apparatus according to claim 33, wherein the limiting condition indicated by the artificial intelligence model service capability information comprises at least one of:
a limiting condition determined based on a model providing capability of the artificial intelligence model service network element; or
a limiting condition of the iNB on use of the model by the iWT.

36. The apparatus according to claim 33, wherein the receiving unit is specifically configured to receive artificial intelligence model service system information sent by the iNB, the artificial intelligence model service system information carrying the artificial intelligence model service network element information.

37. The apparatus according to claim 36, wherein the receiving unit is further configured to receive configuration information for the artificial intelligence model service system information sent by the iNB, the configuration information being configured for indicating that the iNB supports an artificial intelligence model obtaining service.

38. The apparatus according to claim 37, wherein the receiving unit is specifically configured to receive a first broadcast message sent by the iNB, the first broadcast message carrying the configuration information.

39. The apparatus according to claim 38, wherein the configuration information is further configured for indicating an obtaining manner of the artificial intelligence model service system information.

40. The apparatus according to claim 39, wherein the obtaining manner of the artificial intelligence model service system information comprises at least one of the following manners:
the artificial intelligence model service system information is sent through a broadcast message based on a broadcast occasion applied to the artificial intelligence model service system information; or
the artificial intelligence model service system information is sent based on a request of the iWT.

41. The apparatus according to claim 40, wherein the receiving unit is specifically configured to, in the case where it is determined according to the configuration information that the obtaining manner of the artificial intelligence model service system information is that the artificial intelligence model service system information is sent through the broadcast message, receive a second broadcast message sent by the iNB based on the broadcast occasion applied to the artificial intelligence model service system information, the second broadcast message carrying the artificial intelligence model service system information.

42. The apparatus according to claim 40, wherein the sending unit is specifically configured to, in the case where it is determined, according to the configuration information, that the obtaining manner of the artificial intelligence model service system information is that the artificial intelligence model service system information is sent based on the request of the iWT, send an information obtaining request to the iNB; and the receiving unit is specifically configured to receive the artificial intelligence model service system information sent by the iNB based on the information obtaining request.

43. An intelligent base station, iNB, comprising:
a memory for storing a computer program; a transceiver for transmitting and receiving data under control of a processor; and the processor for reading the computer program in the memory and performing the following operations:
controlling the transceiver to send artificial intelligence model service network element information to an iWT, wherein the artificial intelligence model service network element information comprises an identifier of an artificial intelligence model service network element with which the iNB is capable of communicating and/or artificial intelligence model service capability information, the artificial intelligence model service network element is a network element capable of providing an artificial intelligence model in an intelligent radio access network, and the artificial intelligence model service capability information is configured for indicating a limiting condition for obtaining of the artificial intelligence model from the iNB by the iWT; and
controlling the transceiver to receive a model request sent by the iWT based on the artificial intelligence model service network element information.

44. The iNB according to claim 43, wherein the processor is specifically configured to perform the following operation:
obtaining the artificial intelligence model service network element information based on a service discovery process; or
obtaining the artificial intelligence model service network element information based on a network configuration; or
obtaining the artificial intelligence model service network element information based on a service discovery process and a network configuration.

45. The iNB according to claim 43, wherein the artificial intelligence model service network element information comprises the identifiers of one or more artificial intelligence model service network elements; and/or
the identifier of any one of the artificial intelligence model service network elements in the artificial intelligence model service network element information corresponds to one or more pieces of artificial intelligence model service capability information.

46. The iNB according to claim 43, wherein the limiting condition indicated by the artificial intelligence model service capability information comprises at least one of:
a limiting condition determined based on a model providing capability of the artificial intelligence model service network element; or
a limiting condition of the iNB on use of the model by the iWT.

47. The iNB according to claim 43, wherein the processor is specifically configured to perform the following operation:
controlling the transceiver to send artificial intelligence model service system information to the iWT, the artificial intelligence model service system information carrying the artificial intelligence model service network element information.

48. The iNB according to claim 47, wherein the processor is specifically configured to perform the following operation:
controlling the transceiver to send configuration information for the artificial intelligence model service system information to the iWT, the configuration information being configured for indicating that the iNB supports an artificial intelligence model obtaining service.

49. The iNB according to claim 48, wherein the processor is specifically configured to perform the following operation:
controlling the transceiver to send a first broadcast message, the first broadcast message carrying the configuration information.

50. The iNB according to claim 48, wherein the configuration information is further configured for indicating an obtaining manner of the artificial intelligence model service system information.

51. The iNB according to claim 50, wherein the obtaining manner of the artificial intelligence model service system information comprises at least one of the following manners:
the artificial intelligence model service system information is sent through a broadcast message based on a broadcast occasion applied to the artificial intelligence model service system information; or
the artificial intelligence model service system information is sent based on a request of the iWT.

52. The iNB according to claim 51, wherein the processor is specifically configured to perform the following operation:
in the case where the obtaining manner of the artificial intelligence model service system information is thatthe artificial intelligence model service system information is sent through the broadcast message, controlling the transceiver to send a second broadcast message based on the broadcast occasion applied to the artificial intelligence model service system information, the second broadcast message carrying the artificial intelligence model service system information.

53. The iNB according to claim 51, wherein the processor is specifically configured to perform the following operation:
in the case where the obtaining manner of the artificial intelligence model service system information is that the artificial intelligence model service system information is sent based on the request of the iWT, controlling the transceiver to receive an information obtaining request sent by the iWT and send the artificial intelligence model service system information to the iWT based on the information obtaining request.

54. A model obtaining intelligent wireless terminal, iWT, comprising:
a memory for storing a computer program; a transceiver for transmitting and receiving data under control of a processor; and the processor for reading the computer program in the memory and performing the following operations:
controlling the transceiver to receive artificial intelligence model service network element information sent by an iNB, wherein the artificial intelligence model service network element information comprises an identifier of an artificial intelligence model service network element with which the iNB is capable of communicating and/or artificial intelligence model service capability information, the artificial intelligence model service network element is a network element capable of providing an artificial intelligence model in an intelligent radio access network, and the artificial intelligence model service capability information is configured for indicating a limiting condition for obtaining of the artificial intelligence model from the iNB by the iWT; and
controlling the transceiver to send a model request to the iNB based on the artificial intelligence model service network element information.

55. The iWT according to claim 54, wherein the artificial intelligence model service network element information comprises the identifiers of one or more artificial intelligence model service network elements; and/or
the identifier of any one of the artificial intelligence model service network elements in the artificial intelligence model service network element information corresponds to one or more pieces of artificial intelligence model service capability information.

56. The iWT according to claim 54, wherein the limiting condition indicated by the artificial intelligence model service capability information comprises at least one of:
a limiting condition determined based on a model providing capability of the artificial intelligence model service network element; or
a limiting condition of the iNB on use of the model by the iWT.

57. The iWT according to claim 54, wherein the processor is specifically configured to perform the following operation:
controlling the transceiver to receive artificial intelligence model service system information sent by the iNB, the artificial intelligence model service system information carrying the artificial intelligence model service network element information.

58. The iWT according to claim 57, wherein the processor is specifically configured to perform the following operation:
controlling the transceiver to receive configuration information for the artificial intelligence model service system information sent by the iNB, the configuration information being configured for indicating that the iNB supports an artificial intelligence model obtaining service.

59. The iWT according to claim 58, wherein the processor is specifically configured to perform the following operation:
controlling the transceiver to receive a first broadcast message sent by the iNB, the first broadcast message carrying the configuration information.

60. The iWT according to claim 59, wherein the configuration information is further configured for indicating an obtaining manner of the artificial intelligence model service system information.

61. The iWT according to claim 60, wherein the obtaining manner of the artificial intelligence model service system information comprises at least one of the following manners:
the artificial intelligence model service system information is sent through a broadcast message based on a broadcast occasion applied to the artificial intelligence model service system information; or
the artificial intelligence model service system information is sent based on a request of the iWT.

62. The iWT according to claim 61, wherein the processor is specifically configured to perform the following operation:
in the case where it is determined, according to the configuration information, that the obtaining manner of the artificial intelligence model service system information is that the artificial intelligence model service system information is sent through the broadcast message, controlling the transceiver to receive a second broadcast message sent by the iNB based on the broadcast occasion applied to the artificial intelligence model service system information, the second broadcast message carrying the artificial intelligence model service system information.

63. The iWT according to claim 61, wherein the processor is specifically configured to perform the following operations:
in the case where it is determined, according to the configuration information, that the obtaining manner of the artificial intelligence model service system information is that the artificial intelligence model service system information is sent based on the request of the iWT, controlling the transceiver to send an information obtaining request to the iNB; and
controlling the transceiver to receive the artificial intelligence model service system information sent by the iNB based on the information obtaining request.

64. A computer-readable storage medium having a computer program stored thereon, the computer program, when executed by a processor, implementing the steps of the method according to any one of claims 1 to 11.

65. A computer-readable storage medium having a computer program stored thereon, the computer program, when executed by a processor, implementing the steps of the method according to any one of claims 12 to 21.
